(19) Europäisches Patentamt
European Patent Office
Office européen des brevets

(11) EP 1 279 720 A1

(12) EUROPEAN PATENT APPLICATION
published in accordance with Art. 158(3) EPC

(43) Date of publication:
29.01.2003 Bulletin 2003/05

(21) Application number: 01912476.7

(22) Date of filing: 19.03.2001

(51) Int Cl.7: C09K 21/14, C08L 101/00, C08L 85/02, C08G 79/02, C08G 79/04, C08F 30/02, C08F 290/06, C08F 290/14, C08F 299/02

(86) International application number:
PCT/JP01/02153

(87) International publication number:
WO 01/070904 (27.09.2001 Gazette 2001/39)

(84) Designated Contracting States:
AT BE CH CY DE DK ES FI FR GB GR IE IT LI LU MC NL PT SE TR

(30) Priority: 21.03.2000 JP 2000078684
24.11.2000 JP 2000358220

(71) Applicant: OTSUKA KAGAKU KABUSHIKI KAISHA
Osaka-shi, Osaka-fu 540-0021 (JP)

(72) Inventors:
- TANIGUCHI, M.
OTSUKA KAGAKU KABUSHIKI KAISHA
Osaka-shi, Osaka 540-0021 (JP)
- TADA,Y.
OTSUKA KAGAKU KABUSHIKI KAISHA
Tokushima-shi, Tokushima 771-0 (JP)
- NISHIOKA,Yoichi;
OTSUKA KAGAKU KABUSHIKI KAISHA
Tokushima-shi, Tokushima (JP)
- NAKANO, Shinji;
OTSUKA KAGAKU KABUSHIKI KAISHA
T okushima-shi, Tokushima 7 (JP)

(74) Representative: Wablat, Wolfgang, Dr.Dr.
Patentanwalt,
Potsdamer Chaussee 48
14129 Berlin (DE)

# (54) FLAME RETARDANT, FLAME-RETARDANT RESIN COMPOSITION, MOLDED OBJECT, AND ELECTRONIC PART

(57) The present invention has an object to provide a flame retardant excellent in heat resistance and hard to cause juicing or mold deposits in molding. A flame retardant relating to the present invention has a feature to be made of a polymer constituted of at least one kind, as a building block, among phosphazene compounds each having, in a molecule thereof, at least one of one kind of polymerizable functional group selected from the group consisting of a vinyl group, an allyl group, an acryloyloxy group, a methacryloyloxy group, an acryloyl group, and a methacryloyl group.

EP 1 279 720 A1

## Description

Technical Field

The present invention relates to a flame retardant, a flame-retardant resin composition, a molded article and an electronic part using the resin composition. More particularly, the present invention relates to a flame retardant made of a phosphazene having a polymerizable functional group, a flame-retardant resin composition compounded with the flame retardant, a molded article and an electronic part using the flame-retardant resin composition.

Background Art

Resins have been used as materials of various kinds of products such as electrical appliances and automobiles because of characteristics such as excellencies in moldability, mechanical properties, electrical properties, outer appearance and others. Resins, however, have faults that they are easy to burn as compared with metal material or inorganic material. Improvement on fire resistance of a resin, therefore, has been a problem.

Conventionally, it has been known that a phosphazene compound is incorporated into a resin in order to impart a fire resistance thereto. For example, in the publication of Japanese Unexamined Patent Publication No. Hei-7-292233, there is disclosed a flame-retardant resin composition obtained by incorporating a phosphazene compound into polycarbonate resin or the like.

A phosphazene based compound has advantages of being low in risks of vaporization, disappearance and bleed-out in molding or during the usage of an article containing the compound, and excellent in effect of enhancing fire resistance, and furthermore, having less of a load imposed on environment because of being a halogen-free flame retardant.

In a case where a resin composition was produced using a conventional phosphazene based compound, however, excellent flame retardant performance at an initial stage was not able to be sustained over a long period.

In addition, while thermoplastic resins have been used in housings of various kinds of monitors or printers and structural parts thereof, in such cases, for the purpose of improving functionality due to thin wall molding or improve productivity due to reduction in molding cycle, a molding temperature of a resin is raised to a temperature in the vicinity of 300°C, for example, which is higher as compared with a prior art practice, to increase flowability of the resin. Moreover, in cases of thermoset resins used in a printed wiring board, encapsulant and others, for example, epoxy resin and phenol resin as well, lead-free solder has been put into practical use from the viewpoint of environmental problems and, because of rise in reflow temperature (250 to 260°C) along this trend, heat resistance is required for resin parts used in applications of electrical and electronic parts. In such a high temperature region, a conventional phosphazene compound has a risk of vaporization and disappearance, so that a flame retardant of a more excellent remaining ability within the bulk of resin has been required.

On the other hand, a technique for curing a resin using energy rays such as ultraviolet rays or electron rays has been put into practical use instead of conventional thermoset resins in various applications mainly in a coating material field and an electrical and electronic material field, as a curing technique achieving energy conservation, and less of environmental load because of being solvent-free; therefore, materials using the technique, in recent years, have been indispensable in various kinds of industrial fields.

As a curable phosphazene compound, there is disclosed a phosphazene compound having a (metha)acryloyloxy group and its polymer in Japanese Unexamined Patent Publication No. Sho-64-14239, Japanese Unexamined Patent Publication No. Sho-64-14240 and others. The publications, however, disclose only that the above phosphazene compound itself is solely used as a thermoset resin in application of lens material, but neither discloses nor suggests its use as a flame retardant for a resin used as electrical and electronic material.

Disclosure of the Invention

The present inventors have conducted serious studies in order to solve the above problem, which, as a result of the studies, leads to a discovery of excellent technical means, thereby having completed the present invention.

That is, according to the present invention, there is provided a flame retardant comprising a polymer constituted of at least one type, as a structure unit, of phosphazene compounds, each having per molecule at least one polymerizable functional group selected from among a vinyl group, an allyl group, an acryloyloxy group, a methacryloyloxy group, an acryloyl group, and a methacryloyl group.

According to the present invention, there is provided a flame retardant comprising a polymer constituted of at least one type, as a structure unit, of phosphazene compounds, each having per molecule at least one of an acryloyloxy group-substituted phenyl group, an acryloyloxyalkyl group-substituted phenyl group, a methacryloyloxy group-substituted phenyl group and a methacryloyloxyalkyl group-substituted phenyl group, in which the number of repeat

units are 3 to 15.

According to the present invention, there is provided a flame-retardant resin composition characterized by admixing at least one of polymers each comprising, as a structure unit, a phosphazene compound having a polymerizable functional group with a resin.

According to the present invention, there is provided a flame-retardant resin composition, in which the structural unit is derived from at least one of phosphazene compounds each having per molecule at least one of an acryloyloxy group-substituted phenyl group, an acryloyloxyalkyl group-substituted phenyl group, a methacryloyloxy group-substituted phenyl group and a methacryloyloxyalkyl group-substituted phenyl group, in which the number of repeat units are 3 to 10000.

According to the present invention, there is provided a flame-retardant resin composition in which the structure unit of the polymer admixed with a resin is at least one type selected from cyclic and/or linear phosphazene compounds having a substituted phenyl group, expressed by a general formula (1):

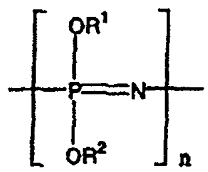

wherein each $R^1$ and $R^2$, being the same or different, is a hydrogen atom, an alkyl group having 1 to 18 carbon atoms, a cycloalkyl group having 5 to 8 carbon atoms, an aryl group having 6 to 14 carbon atoms, a hydroxyaryl group having 6 to 14 carbon atoms, an alkylaryl group having 7 to 18 carbon atoms, an alkenyl group having 2 to 18 carbon atoms, an alkenylaryl group having 8 to 18 carbon atoms, a cyano group, or a group expressed by a general formula (2):

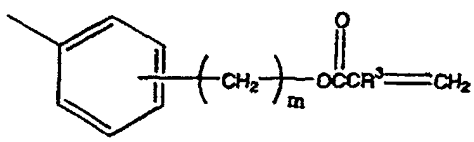

in which $R^3$ is hydrogen atom or a methyl group and m is an integer between 0 to 6, the substituted phenyl group being acryloyloxy group-substituted phenyl group, an acryloyloxyalkyl group-substituted phenyl group, a methacryloyloxy group-substituted phenyl group or a methacryloyloxyalkyl group-substituted phenyl group,
wherein, in the formula (1), at least one of n $R^1$s and n $R^2$s is the substituted phenyl group expressed by the general formula (2),
wherein in the formula (1), n represents an integer between 3 to 10000,
both terminals of the compound being coupled to each other to form a cyclic structure or attach to different terminal groups respectively to form a linear structure, where the terminal group in the linear structure on the phosphorus atom side is a group $-N=P(OR^1)_3$, a group $-N=P(OR^2)_3$, a group $-N=P(=O)OR^1$ or a group $-N=P(=O)OR^2$, and on the nitrogen atom side is a group $-P(OR^1)_4$, a group $-P(OR^2)_4$, a group $-P(=O)(OR^1)_2$ or a group $-P(=O)(OR^2)_2$, in which $R^1$ and $R^2$ are the same as above.

According to the present invention, there is provided a flame-retardant resin composition characterized by admixing at least one of polymers each comprising, as a structure unit, a phosphazene compound having a polymerizable functional group selected from among a vinyl group, an allyl group, an acryloyloxy group, a methacryloyloxy group, an acryloyl group, and a methacryloyl group with a resin.

According to the present invention, there is provided a flame-retardant resin composition, wherein the structure unit is derived from a phosphazene compound having per molecule at least one of a vinyl group-substituted phenyl group, an allyl group-substituted phenyl group, an acryloyloxy group-substituted phenyl group, an acryloyloxyalkyl group-substituted phenyl group, a methacryloyloxy group-substituted phenyl group, a methacryloyloxyalkyl group-substituted phenyl group, an acryloyl group-substituted phenyl group, an acryloylalkyl group-substituted phenyl group, a methacryloyl group-substituted phenyl group and a methacryloylalkyl group-substituted phenyl group.

According to the present invention, there is provided a flame-retardant resin composition in which the the structure unit of the polymer admixed with a resin is at least one type selected from cyclic and/or linear phosphazene compounds having a polymerizable functional group, expressed by a general formula (1):

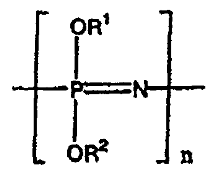

wherein each $R^1$ and $R^2$, being the same or different, is hydrogen atom, an alkyl group having 1 to 18 carbon atoms, a cycloalkyl group having 5 to 8 carbon atoms, an aryl group having 6 to 14 carbon atoms, a hydroxyaryl group having 6 to 14 carbon atoms, alkylaryl group having 7 to 18 carbon atoms, an alkenyl group having 2 to 18 carbon atoms, an alkenylaryl group having 8 to 18 carbon atoms, a cyano group, or a substituted phenyl group having a vinyl group at its terminal, expressed by a general formula (2):

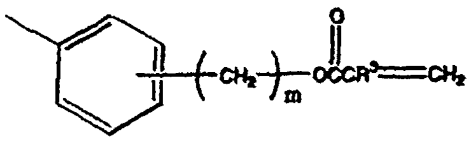

in which $R^3$ is hydrogen atom or a methyl group, and m is an integer between 0 to 6, or
a general formula (3):

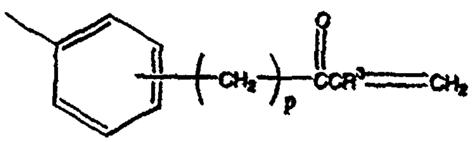

in which $R^3$ is as defined above, and p is an integer between 0 to 6, or a general formula (4):

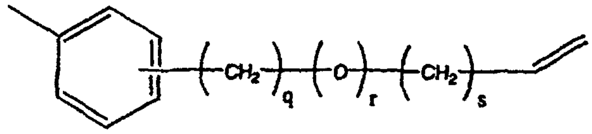

in which q and s are integers between 0 to 6 respectively, r is 0 or 1,
wherein at least one of n $R^1$s and n $R^2$s is the substituted phenyl group expressed by the general formula (2), (3) or (4), wherein in the formula (1), n represents an integer between 3 to 10000,
both terminals of the compound being coupled to each other to form a cyclic structure or attach to different terminal groups respectively to form a linear structure, where the terminal group in the linear structure on the phosphorus atom side is represented by a group $-N=P(OR^1)_3$, a group $-N=P(OR^2)_3$, a group $-N=P(=O)OR^1$ or a group $-N=P(=O)OR^2$, and on the nitrogen atom side is represented by a group $-P(OR^1)_4$, a group $-P(OR^2)_4$, a group $-P(=O)(OR^1)_2$ or a group $-P(=O)(OR^2)_2$, in which $R^1$ and $R^2$ are the same as above.

According to the present invention, there is provided a flame-retardant resin composition in which the structure unit is derived from at least one of cyclic and/or linear phosphazene compounds, in which the number of repetitive units are 3 to 15.

According to the present invention, there is provided a flame-retardant resin composition, wherein the structure unit is derived from at least one of cyclic and/or linear phosphazene compounds, each having per molecule at least one acryloyloxy group-substituted phenyl group, acryloyloxyalkyl group-substituted phenyl group, methacryloyloxy group-substituted phenyl group, and methacryloyloxyalkyl group-substituted phenyl group, in which the number of repeat units is 3 to 15.

According to the present invention, there is provided a flame-retardant resin composition in which a polymer contains, as a structure unit, at least one of a thermo-polymerizable or a photo-polymerizable monomer and oligomer

According to the present invention, there is provided a flame-retardant resin composition in which the polymer

is a copolymer having a structural unit derived from a compound having a vinyl group.

According to the present invention, there is provided a molded article obtained by molding the flame-retardant resin composition.

According to the present invention, there is provided an electronic part obtained by molding the flame-retardant resin composition.

BEST MODE FOR CARRYING OUT THE INVENTION

In a flame-retardant resin composition of the present invention, no specific limitation is placed on a resin in use, but any of various kinds of thermoplastic resin, thermoset resin and others can be employed. The resins may be either natural or synthetic.

As concrete examples of thermoplastic resins, there are named the following resins: polyethylene, polypropylene, polyisoprene, chlorinated polyethylene, polyvinyl chloride, polybutadiene, polystyrene, high-impact polystyrene, acrylonitrile-styrene resin (AS resin), acrylonitrile-butadiene-styrene resin (ABS resin), methyl methacrylate-butadiene-styrene resin (MBS resin), methyl methacrylate-acrylonitrile-butadiene-styrene resin (MABS resin), acrylonitrile-acrylic rubber-styrene resin (AAS resin), poly(methyl (metha)acrylate), polyesters (polyethylene terephthalate, polybutylene terephthalate, polyethylene naphthalate and others), polycarbonate, polyphenylene ether, modified polyphenylene ether, polyamide (aliphatic and/or aromatic), polyphenylene sulfide, polyimide, poly(ether ether ketone), polysulfone, polyarylate, poly(ether ketone) poly(ether nitrile), poly(thioether sulfone), poly(ether sulfone), polybenzimidazole, polycarbodiimide, polyamidimide, poly(etherimide), a liquid crystal polymer and others. Among them, preferable are polyester, ABS resin, polycarbonate, modified polyphenylene ether, polyamide, polyimide and others.

As concrete examples of thermoset resins, there are named the following resins: polyurethane, phenol resin, melamine resin, urea resin, unsaturated polyester resin, diaryl phthalate resin, silicon resin, epoxy resin (bisphenol epoxy resin, bisphenol A epoxy resin, bisphenol F epoxy resin, bisphenol AD epoxy resin, bisphenol S epoxy resin, phenol novolac epoxy resin, cresol novolac epoxy resin, cycloaliphatic epoxy resin, glycidyl ester epoxy resin, glycidyl ether epoxy resin, polyfunctional epoxy resin, glycidyl amine epoxy resin, heterocyclic epoxy resin, dicyclopentadiene type epoxy resin, naphthalene type epoxy resin, amorphous epoxy resin, biphenyl type epoxy resin, polyfunctional epoxy resin, urethane-modified epoxy resin, brominated bisphenol A epoxy resin) and others. Among them, preferable are polyurethane, phenol resin, melamine resin, epoxy resin and others and epoxy resin is especially preferable.

In the present invention, thermoplastic resins and thermoset resins may be used singly or in a combination of two or more thereof.

In order to obtain a flame-retardant curable resin composition of the present invention by illumination with heat, an electromagnetic wave such as ultraviolet rays or visible rays, or energy rays such as electron rays such as electron beams, it is preferable to use the flame-retardant resin composition of the present invention together with a curable (thermo-polymerizable or photo-polymerizable) monomer and/or an oligomer. The monomer and oligomer may be either natural or synthetic.

As thermo-polymerizable or photo-polymerizable monomers and/or oligomers, there are preferably named the following compounds or resin precursors: a vinyl compound, a vinylidene compound, a diene compound, cyclic compounds such as lactone, lactam and cyclic ether, acrylic compound, and an epoxy compound: and to be further detailed, vinyl chloride, butadiene, styrene, high-impact polystyrene precursor, acrylonitrile-styrene resin (AS resin) precursor, acrylonitrile-butadiene-styrene resin (ABS resin) precursor, methyl methacrylate-butadiene-styrene resin (MBS resin) precursor, methyl methacrylate-acrylonitrile-butadiene-styrene resin (MABS resin) precursor, acrylonitrile-acrylic rubber-styrene resin (AAS resin) precursor, methyl(metha)acrylate, epoxy acrylate resin precursor, epoxidized oil acrylate resin precursor, urethane acrylate resin precursor, polyester acrylate resin precursor, polyether acrylate resin precursor, acrylic acrylate resin precursor, unsaturated polyester resin precursor, vinyl/acrylate resin precursor, vinyl ether resin precursor, polyene/thiol resin precursor, silicon acrylate resin precursor, polybutadiene acrylate resin precursor, polystyryl(ethyl) methacrylate resin precursor, polycarbonate acrylate resin precursor, photo-curable polyimide resin precursor, photo-curable silicon containing resin precursor, photo-curable epoxy resin precursor, cycloaliphatic epoxy resin precursor, glycidyl ether epoxy resin precursor and others. Among them, preferable are styrene, butadiene, epoxy acrylate resin precursor, urethane acrylate resin precursor, polyester acrylate resin precursor and others. These may be used singly or in a combination of two or more thereof.

The above-mentioned thermoplastic resins and thermoset resins may be used in a mixture thereof in the range of a mixed ratio in which polymerizability of a flame-retardant curable resin composition of the present invention is not lost.

At least one of polymers (in this specification, sometimes referred to as "phosphazene polymer") each having a structural unit derived from a phosphazene compound having a polymerizable functional group is admixed with the flame-retardant resin composition of the present invention.

As polymerizable functional groups herein, there can be exemplified the following groups: a vinyl group, an

allyl group, an acryloyloxy group, a methacryloyloxy group, an acryloyl group, a methacryloyl group and various kinds of groups containing these groups. Note that in this specification, "(metha)acryloyloxy (alkyl) group" represents an acryloyloxy group, an acryloyloxyalkyl group, a methacryloyloxy group (a (metha)acryloyloxy group) or a methacryloyloxyalkyl group (a (metha)acryloyloxyalkyl group); and "(metha)acryloyl(alkyl) group represents an acryloyl group, an acryloylalkyl group, a methacryloyl group (a methaacryloyl group) or a methacryloylalkyl group (a methaacryloylalkyl group).

Furthermore, an acryloyloxy group, a methacryloyloxy group (a methaacryloyloxy group) are also referred to as an acrylic group, a methacrylic group (a methaacrylic group) in common use.

The phosphazene polymer used in the flame retardant of the present invention comprises a polymer having a structural unit derived from a phosphazene compound having 3 to 10000 repeat units of mono-phosphazenes each having an NP bond, and having per molecule at least one polymerizable functional group such as a vinyl group-substituted phenyl group, an allyl group-substituted phenyl group, a (metha)acryloyloxy(alkyl) group-substituted phenyl group, a (metha)acryloyl(alkyl) group-substituted phenyl group or the like.

More specifically, the phosphazene polymer used in the flame retardant of the present invention includes three types, that is, firstly, a polymer (single phosphazene polymer) obtained by polymerizing a structural unit of only one mono-phosphazene having an NP bond, which has per molecule at least one polymerizable functional group such as vinyl group-substituted phenyl group, an allyl group-substituted phenyl group, a (metha)acryloyloxy(alkyl) group-substituted phenyl group, a (metha)acryloyl(alkyl) group-substituted phenyl group, an acryloyl group, a methacryloyl group or the like in which 3 to 10000 units of mono-phosphazene; secondly a polymer (multi-phosphazene copolymer) obtained by copolymerizing structural units of two or more phosphazene compounds (both polymers are also sometimes referred to as a phosphazene homopolymer in this specification); and, thirdly, a polymer obtained by copolymerizing at least one of the phosphazene compounds as mentioned above onto at least one of other compounds polymerizable to the above-mentioned phosphazene compounds (this polymer is sometimes referred to as "phosphazene composite copolymer" in this specification).

Among the phosphazene compounds, preferable is a phosphazene compound having 3 to 15 repeat units of mono-phosphazene.

The phosphazene polymer used in the flame retardant of the present invention is a polymer containing two or more structural units of phosphazene compounds and preferably three or more structural units of phosphazene compounds, and usually the polymer contains 2 to about 10000 structural units of phosphazene compound.

As concrete examples of the flame retardants, for example, there can be exemplified a polymer (a phosphazene homopolymer and a phosphazene composite copolymer) containing a structural unit derived from cyclic and/or linear phosphazene compounds having a polymerizable functional group, expressed by a general formula (1):

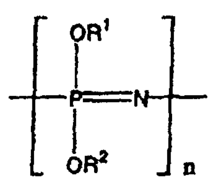

wherein each of $R^1$ and $R^2$, which are identical or different, is a hydrogen atom, an alkyl group having 1 to 18 carbon atoms, a cycloalkyl group having 5 to 8 carbon atoms, an aryl group having 6 to 14 carbon atoms, a hydroxyaryl group having 6 to 14 carbon atoms, alkylaryl group having 7 to 18 carbon atoms, an alkenyl group having 2 to 18 carbons, an alkenylaryl group having 8 to 18 carbons, a cyano group, or
a substituted phenyl group having a vinyl group at its terminal, expressed by a general formula (2):

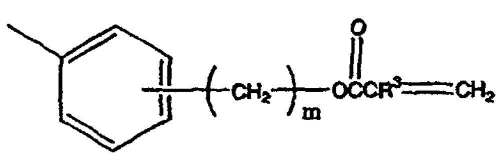

in which $R^3$ is a hydrogen atom or a methyl group, and m is an integer between 0 to 6, or
a general formula (3):

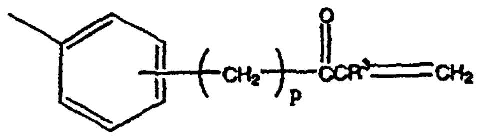

in which $R^3$ is as defined above and p is an integer between 0 to 6, or
a general formula (4):

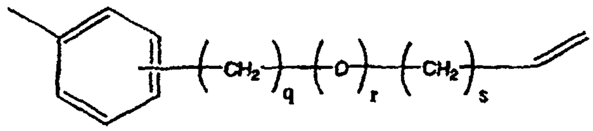

in which q and s are integers between 0 to 6 respectively, r is an integer of 0 or 1
wherein at least one of n $R^1$s and n $R^2$s is the substituted phenyl group expressed by the formula (2), (3) or (4),
wherein in the formula 1, n represents an integer between 3 to 10000,
both terminals of the compound being coupled to each other to form a cyclic structure or attached to different terminal groups respectively to form a linear structure, where the terminal group in a linear structure on the phosphorus atom side being represented by group $-N=P(OR^1)_3$, group $-N=P(OR^2)_3$, group - $N=P(=O)OR^1$ or group $-N=P(=O)OR^2$, and on the nitrogen atom side being represented by group $-P(OR^1)_4$, group $-P(OR^2)_4$, group $-P(=O)(OR^1)_2$ or group - P $(=O)(OR^2)_2$, in which $R^1$ and $R^2$ are the same as above. Among them, preferable is a polymer (phosphazene homopolymer and a phosphazene composite copolymer) containing a structural unit derived from cyclic and/or linear phosphazene compounds of the general formula (1), having a polymerizable functional group expressed by the general formula (2).

Among the phosphazene compounds expressed by the general formula (1), especially preferable is a phosphazene homopolymer and a phosphazene composite copolymer containing phosphazene compounds (1), wherein the number of repeat units are 3 to 15.

A flame retardant of the present invention can be produced in ways that only the structural unit(s) derived from one, or two or more of cyclic and/or linear phosphazene compounds each having at least one polymerizable functional group (for example, (metha)acryloyloxy (alkyl) group-substituted phenyl group) are polymerized, or are copolymerized to other compounds copolymerizable thereto such as a monomer and/or a macromer containing a vinyl group.

A cyclic and/or a linear phosphazene compound, having at least one (metha)acryloyloxy(alkyl) group-substituted phenyl group that is used as a raw material for a flame retardant of the present invention can be produced by reacting a cyclic and/or linear phosphazene compound having a hydroxy group with (metha)acrylic acid, (metha)acrylic halide or (metha)acrylic anhydride in an organic solvent such as, preferably, benzene, toluene, xylene, ether, tetrahyrofuran or the like at room temperature for 1 to 20 hours, followed by a further reaction for about another 1 to 3 hours at a reflux temperature of the solvent used for completion of the reaction.

A cyclic and/or linear phosphazene compound having a hydroxy group can be produced according to methods described in articles and patent publications; which are, for example, in Masaaki YOKOYAMA et. al.,; Journal of the Chemical Society of Japan. Industrial chemistry, Vol. 67, No. 9, p. 1378 (1964), Tomoya OKUBASHI et. al.,; Journal of the Chemical Society of Japan. Industrial chemistry, Vol. 73, No. 6, p. 1164 (1970), Japanese Unexamined Patent Publication No. Sho-58-219190, Alessandro Medici, et. al., Macromolecules, Vol. 25, No. 10, p. 2569 (1992) and others.

For example, dihydric phenol in which one hydroxyl group is protected by a methyl group or benzyl group, such as lithium salt, sodium salt or potassium salt of 4-methoxyphenol, 4-(benzyloxy)phenol is reacted with phosphonitrile chloride (Japanese Unexamined Patent Publication No. Sho-54-145394, Japanese Unexamined Patent Publication No. Sho-54-145395 and others) and then reacted with pyridine hydrogen halide salt or boron tribromide to remove the protective group of methyl group or benzyl group thereby changing the protected group to hydroxyl group, thus producing a target phosphazene compound.

A phosphazene compound can also be produced by a reaction of lithium salt, sodium salt or potassium salt of hydroxyalkylphenol with phosphonitrile chloride.

A cyclic and/or linear phosphazene compound partly having hydroxy group-substituted phenoxy groups can be produced by a reaction between dihydric phenol in which one hydroxyl group is protected by a methyl group or benzyl group of lithium salt, sodium salt and/or potassium salt of 4-methoxyphenol, 4-(benzyloxy)phenol or hydroxyalkylphenol and phosphonitrile chloride in the presence of lithium salt, sodium salt or potassium salt of an alcohol compound or a phenol compound.

In a reaction between a cyclic and/or a linear phosphazene compound having a hydroxy group and (metha) acrylic acid, there may be used a catalyst such as a mineral acid such as hydrochloric acid or sulfuric acid, an organic acid such as benzene sulfonic acid or p-toluene sulfonic acid, and metal halides such as tin chloride, zinc chloride, ferric chloride, aluminum chloride and others. They are used alone or in admixture thereof.

In a reaction between a cyclic and/or a linear phosphazene compound having a hydroxy group and (metha) acrylic acid halide (for example, acrylic acid chloride and methacrylic acid chloride), there can be used a base such as triethyl amine or pyridine, or a synthetic absorbent such as synthetic zeolite to dehydrohalogenate.

In a reaction between a cyclic and/or a linear phosphazene compound having a hydroxy group and acrylic anhydride and/or methacrylic anhydride, it is preferable that acrylic acid and/or methacrylic acid produced during the reaction is removed out from the system together with a solvent.

A cyclic and/or a linear phosphazene compound having at least one (metha)acryloyl(alkyl)group-substituted phenyl group used as a raw material of the flame retardant of the present invention can be produced by a reaction between phosphonitrile chloride and sodium salt or potassium salt of (metha)acryloyl(alkyl)group-substituted phenol according to a common method. In the reaction, it is preferably performed in an inactive organic solvent such as tetrahydrofuran at a temperature in the vicinity of 0°C so that no polymerization occurs at (metha)acryloyl(alkyl) group. In addition, in case where the reaction is not completed, after addition of a polymerization inhibitor, the temperature of the system may be gradually raised to accelerate the reaction.

A cyclic and/or a linear phosphazene compound (in a case of r = 1, in the general formula (4)) having at least one terminal vinyl group-substituted phenyl group, used as a raw material of a flame retardant of the present invention can be produced by a reaction between, for example, a cyclic and/or a linear phosphazene compound having a hydroxy group, and vinyl halide, allyl halide or halogenated 1-alkenyls, preferably, in an organic solvent such as acetone, ethyl acetate, chloroform, benzene, toluene, xylene, ether, tetrahydrofuran or the like in coexistence of an oxygen scavenger such as triethyl amine or pyridine at a temperature in the range of from 0°C to room temperature (for example, 20°C to 30°C) for 1 to 10 hours, followed by an additional reaction performed at a reflux temperature of the solvent in use for about 1 to 2 hours for completing the reaction. In addition, as for the phosphazene compound of the general formula (4) in which r is 0, phosphonitrile chloride is reacted with sodium salt or potassium salt of terminal vinyl group-substituted phenols according to a common method. In the reaction, it is preferable that the reaction is caused in an inactive organic solvent such as tetrahydrofuran at a low temperature in the range of, for example, from - 78°C to 0°C for 1 to 20 hours so that no polymerization of terminal vinyl group occurs.

As concrete examples of a cyclic and/or a linear phosphazene compound having (metha)acryloyloxy(alkyl) group-substituted phenyl group, there are named the following compounds:

cyclotriphosphazenes substituted with a (metha)- acryloyloxyphenoxy group and a phenoxy group such as (metha) acryloyloxyphenoxy-pentaphenoxycyclotriphosphazene, di((metha)acryloyloxyphenoxy)-tetraphenoxy- cyclotriphosphazene, tri((metha)acryloyloxyphenoxy)- triphenoxycyclotriphosphazene, tetra((metha)acryloyloxyphenoxy)-diphenoxy cyclotriphosphazene and penta((metha)acryloyloxyphenoxy)- phenoxycyclotriphosphazene, and hexa(metha)acryloyloxyphenoxycyclotriphosphazene;

cyclotriphosphazenes substituted with a (metha)- acryloyloxymethylphenoxy group and a phenoxy group such as (metha)acryloyloxymethylphenoxy-pentaphenoxy-cyclotriphosphazene, di((metha)acryloyloxymethylphenoxy)-tetraphenoxycyclotriphosphazene, tri((metha)acryloyloxymethylphenoxy)-triphenoxy- cyclotriphosphazene, tetra((metha)acryloyloxymethylphenoxy)-diphenoxycyclotriphosphazene and penta((metha)acryloyloxymethylphenoxy)-phenoxy- cyclotriphosphazene, and hexa(metha)acryloyloxymethylphenoxy-cyclotriphosphazene;

cyclotriphosphazenes substituted with a (metha)-acryloyloxyethylphenoxy group and a phenoxy group such as (metha)acryloyloxyethylphenoxy-pentaphenoxy-cyclotriphosphazene, di((metha)acryloyloxyethylphenoxy)-tetraphenoxycyclotriphosphazene, tri((metha)acryloyloxyethylphenoxy-triphenoxy-cyclotriphosphazene, tetra((metha) acryloyloxyethylphenoxy)-diphenoxycyclotriphosphazene and penta((metha)acryloyloxyethylphenoxy)-phenoxy-cyclotriphosphazene, and hexa(metha)acryloyloxyethylphenoxy-cyclotriphosphazene; and

cyclotriphosphazenes substituted with a (metha) acryloyloxybutylphenoxy group and a phenoxy group such as (metha)acryloyloxybutylphenoxy-pentaphenoxy- cyclotriphosphazene, di((metha)acryloyloxybutylphenoxy)-tetraphenoxycyclotriphosphazene, tri((metha)acryloyloxybutylphenoxy-triphenoxy- cyclotriphosphazene, tetra((metha)acryloyloxybutylphenoxy)- diphenoxycyclotriphosphazene and penta((metha)acryloyloxybutylphenoxy)-phenoxy- cyclotriphosphazene, and hexa(metha)acryloyloxybutylphenoxy- cyclotriphosphazene.

Furthermore, there are named cyclotriphosphazenes substituted with a (metha)acryloyloxyethylphenoxy group and one or more selected from among a buthoxy group, an octyloxy group, a trifluoroethoxy group, an ethylphenoxy group, a naphthyloxy group, an allyloxy group, an allylphenoxy group, a chlorophenoxy group and a trifluoromethylphenoxy group.

Furthermore, there are named cyclotetraphosphazene, cyclopentaphosphazene, cyclohexaphosphazene, cyclophosphazene mixtures (mixtures of cyclophosphazenes of the general formula (1) in which n = 3 to 15), linear phosphazene mixtures (mixtures of linear phosphazenes of the general formula (1) in which n = 3,000 on average) and cyclic and linear phosphazene mixtures (mixtures of cyclic (= cyclo) phosphazene and linear phosphazene of the general formula (1) in which n = 1,000 on average) substituted with a (metha)acryloyloxyphenoxy group and a phenoxy group.

Furthermore, there are named cyclotetraphosphazene, cyclopentaphosphazene, cyclohexaphosphazene, cyclophosphazene mixtures (mixtures of cyclophosphazenes of the general formula (1) in which n = 3 to 15), linear phosphazene mixtures (mixtures of linear phosphazenes of the general formula (1) in which n = 3,000 on average) and cyclic (= cyclo) and linear phosphazene mixtures (mixtures of cyclic phosphazene and linear phosphazene of the general formula (1) in which n = 1,000 on average) substituted with a (metha)acryloyloxyethylphenoxy group and a phenoxy group.

In the present invention, cyclic and/or linear phosphazene compounds each having a (metha)acryloyloxy (alkyl)group can be used singly or in a combination of two or more thereof.

Among the above cyclotriphosphazenes, preferable are, for example, hexa(metha)acryloyloxyphenoxy cyclotriphosphazene; hexa(metha)acryloyloxyethylphenoxy cyclotriphosphazene; a cyclotriphosphazene substituted with a (metha)acryloyloxyphenoxy group and a phenoxy group; a cyclotriphosphazene substituted with a (metha)acryloyloxyethylphenoxy group and a phenoxy group; a cyclophosphazene mixture (a mixture of phosphazenes of the general formula (1) in which n = 3 to 15), and a linear phosphazene mixture (a mixture of phosphazenes of the general formula (1) in which n = 3,000 on average), which are substituted with a (metha)acryloyloxyphenoxy group and a phenoxy group; a cyclophosphazene mixture (a mixture of phosphazenes of the general formula (1) in which n=3 to 15, and a linear phosphazene mixture (a mixture of phosphazenes of the general formula (1) in which n=3000 on average), which are substituted with (metha)acryloyloxyethylphenoxy group and phenoxy group; and others. Especially preferable are a cyclophosphazene mixture (a mixture of cyclophosphazenes of the general formula (1) in which n = 3 to 15) substituted with a (metha)acryloyloxyphenoxy group and a phenoxy group; and a cyclophosphazene mixture (a mixture of cyclophosphazenes of the general formula (1) in which n = 3 to 15) substituted with a (metha)acryloyloxyethylphenoxy group and a phenoxy group.

A phosphazene homopolymer used in the flame retardant of the present invention can be obtained by subjecting polymerization reaction of a cyclic and/or linear phosphazene compound having a (metha)acryloyloxy(alkyl) group. The polymerization reaction can be caused using, if necessary, an initiator or a sensitizer, while usually heating, or irradiating with energy rays such as ultraviolet rays or electron rays.

In a case where a polymerization reaction is caused by heating, there may be used a initiator, which is exemplified: peroxides such as benzoyl peroxide, dicumyl peroxide and diisopropylperoxydicarbonate; and azo compounds such as 2,2-azobisisobutylnitrile, azobis-2,4-dimethylvaleronitrile, azobiscyclohexylnitrile, azobiscyanovaleric acid, and 2,2-azobis(2-methylbutylonitrile).

In a case where hexa(metha)acryloyloxyphenoxy cyclotriphosphazene is used, for example, it is only required that the reaction is conducted using benzoyl peroxide as an initiator in an organic solvent such as a benzene, toluene, xylene, ether, tetrahydrofuran at a temperature of 50°C to the reflux temperature of the solvent for 1 to 20 hours and after the reaction, the solvent and the used initiator are removed through concentration and cleaning, or the like, thereby obtaining a phosphazene polymer.

In a case where a polymerization is performed by illumination with energy rays such as ultraviolet rays, electron rays or the like, a photo-polymerization initiator and a sensitizer, when required, are preferably used. As initiators, there are exemplified: acetophenone, benzophenone, benzoin, thioxanthone, sulfonium, and iodonium initiators. As sensitizers, there is used, for example, tertiary amine and others.

In a case where hexa(metha)acryloyloxyphenoxy-cyclotriphosphazene is used, a benzophenone is used as a photo-polymerization initiator and illumination with ultraviolet rays at an output of 400 W is performed with a high pressure mercury lamp, thereby enabling a phosphazene polymer to be obtained.

A phosphazene composite copolymer used in the flame retardant of the present invention can be produced by mixing the aforesaid cyclic and/or linear phosphazene compound having a (metha)acryloyloxy(alky) group and another compound copolymerizable to the phosphazene compound, followed by polymerization. The polymerization reaction can be caused by adding an initiator and a sensitizer when required while usually heating, or illuminating with energy rays such as ultraviolet rays or electron rays. Selection of an initiator and conditions for polymerization can be determined on the basis of the production process for polymerization to obtain the phosphazene homopolymer.

As examples of those copolymerizable to a phosphazene compound, there are named compounds having a vinyl group such as an aromatic vinyl monomer, a polar functional group containing vinyl monomer, vinyl ether monomer, and the like.

As aromatic vinyl monomers, there are named: styrene, methylstyrene, dimethylstyrene, ethylstyrene, isopropylstyrene, chlorostyrene, dichlorostyrene, bromostyrene and others. Among them, especially preferable is styrene.

As polar functional group-containing vinyl monomers, there are named vinyl chloride, vinylidene chloride, acrylonitrile, (metha)acrylic acid; (metha)acrylic ester such as methyl (metha)acrylate, ethyl (metha)acrylate, propyl (metha)acrylate, butyl (metha)acrylate, octyl (metha)acrylate, nonyl (metha)acrylate, hydroxyethyl (metha)acrylate and vinyl (metha)acrylate; vinyl esters such as vinyl acetate, vinyl butyrate, vinyl caproate and vinyl stearate. Among them, especially preferable is acrylonitrile and methyl (metha)acrylate.

As vinyl ether monomers, divinyl ethers are preferably used.

As concrete examples of a flame retardant of the present invention, there can be named: for example, a linear and/or a crosslinked compound obtained by a reaction of a (metha)acryloyl group of hexa(metha)acryloyloxyphenoxy cyclotriphosphazene; a linear and/or a crosslinked compound obtained by a reaction of a (metha)acryloyl group of hexa(metha)acryloyloxyethylphenoxy cyclotriphosphazene; a linear and/or a crosslinked compound obtained by a reaction of a (metha)acryloyl group of cyclotriphosphazene substituted with a (metha)acryloyloxyphenoxy group and a phenoxy group; a linear and/or a crosslinked compound obtained by a reaction of a (metha)acryloyl group of cyclotriphosphazene substituted with a (metha)acryloyloxyethylphenoxy group and a phenoxy group; a linear and/or a crosslinked compound obtained by a reaction of a (metha)acryloyl group of a cyclophosphazene mixture (a mixture of cyclophosphazenes of the general formula (1) in which n = 3 to 15) substituted with a (metha)acryloyloxyphenoxy group and a phenoxy group; and a linear and/or a crosslinked compound obtained by a reaction of a (metha)acryloyl group of a linear phosphazene mixture (a mixture of linear phosphazenes of the general formula (1) in which n = 3 to 15) substituted with a (metha)acryloyloxyethylphenoxy group and a phenoxy group.

A linear compound and/or a crosslinked compound depend(s) on the percentage of (metha)acryloyl groups in the used cyclic and/or linear phosphazene compound having (metha)acryloyl groups and the reaction conditions. Generally, a linear compound is easier to be produced from the compound having one (metha)acryloyl group, and a crosslinked compound is easier to be produced from the compound having plural groups.

While, in the above description, the case is taken up, as a center, of a (metha)acryloyloxy(alkyl) group-substituted phenyl group that is a kind of a polymerizable functional group preferably employed in the present invention, compounds having other polymerizable functional groups can be used in a similar manner.

No specific limitation is placed on a content of a flame retardant of the present invention relative to a resin, but a content thereof is generally on the order in the range of from 0.1 to 70 parts by weight, preferably on the order in the range of from 0.5 to 50 parts by weight and more preferably on the order in the range of from 1.0 to 40 parts by weight relative to 100 parts by weight of the resin in consideration of impartation of fire resistance and especially long term fire resistance and others, though a content thereof can be properly selected in a wide range according to various conditions such as a kind of a resin to be compounded, whether or not other additive agents are present, a kind and a content of another additive agent if present, an application for a flame-retardant resin composition to be obtained.

While flame retardants of the present invention can be used singly or in a mixture of two or more thereof, a mixture of two or more is preferably employed since the mixture is conveniently produced from the industrial viewpoint.

An excellent fire resistance at the V-0 level defined in UL-94 standard can be imparted to a flame-retardant resin composition by incorporating a flame retardant of the present invention into a thermoplastic or thermoset resin. Such a flame-retardant resin composition exerts an excellent characteristic that an excellent fire resistance at a first stage immediately after incorporation of the flame retardant to a resin can be maintained at the same level over a long time since there occurs almost no bleed-out of a flame retardant of the present invention from the bulk of a resin composition to the surface thereof. In addition, it has been founded that though a flame retardant of the present invention is a polymer, a compatibility with a resin thereof is unexpectedly better than a phosphazene compound that has not been polymerized, thereby enabling impartation of a fire resistance to the resin without degrading characteristics of the resin, especially, a mechanical property, humidity and heat resistances thereof.

Fluororesin, inorganic filler and others can be compounded into a flame-retardant resin composition of the present invention for the purpose of improving flame retardant performance, especially dripping (fire spreading due to dripping in burning) preventive performance to a higher level. Fluororesin and inorganic filler may be incorporated singly or in combination of both.

As fluororesin that can be incorporated for the purpose of improving the dripping preventive performance to a higher level, there can be used known fluororesin and following are exemplified: polytetrafluoroethylene (PTFE), tetrafluoroethylene-hexafluoropropylene copolymer (FEP), tetrafluoroethylene-perfluoroalkyl vinyl ether copolymer (PFA), tetrafluoroethylene-ethylene copolymer (ETFE), poly(trifluorochloroethylene) (CTFE), polyfluorovinylidene (PVdF) and others. Among them, preferable is PTFE. Fluororesins can be used singly or in a combination of two or more thereof. No specific limitation is placed on a content of fluororesin and a content of fluororesin is generally on the order in the range of from 0.01 to 2.5 parts by weight and preferably on the order in the range of from 0.1 to 1.2 parts by weight relative to 100 parts by weight of the resin, though a content thereof can be properly selected in a wide range according to various conditions such as a kind of a resin to be compounded, a quantity of usage of a reactive phenoxyphosphazene compound (1), a kind and a content of another additive agent, an application for a flame-retardant resin

composition to be obtained.

An inorganic filler has characteristics not only to enhance a dripping preventive effect of a flame-retardant resin composition but to improve a mechanical strength thereof.

As an inorganic filler to enhance a dripping preventive effect of a flame-retardant resin composition and improve a mechanical strength thereof, there can be used known resin filler and the following are exemplified: mica, kaolin, talc, silica, clay, barium sulfate, barium carbonate, calcium carbonate, calcium sulfate, aluminum hydroxide, magnesium hydroxide, calcium silicate, titanium oxide, zinc oxide, zinc borate, glass beads, glass balloons, glass flakes, fibrous alkali metal titanate (potassium titanate fibers, sodium titanate fibers and others), fibrous borate (aluminum borate fibers, magnesium borate fibers, zinc borate fibers and others), zinc oxide fibers, titanium oxide fibers, magnesium oxide fibers, gypsum fibers, aluminum silicate fibers, calcium silicate fibers, silicon carbide fibers, titanium carbide fibers, silicon nitride fibers, titanium nitride fibers, carbon fibers, alumina fibers, alumina-silica fibers, zirconia fibers, quartz fibers, thin titanate flakes, thin titanium dioxide flakes and others. Among them, preferable are substances having a shape anisotropy such as fibrous substances, mica, thin titanate flakes (or tabular titanate), thin titanium oxide flakes and especially preferable are fibrous alkali metal titanate, fibrous borate, zinc oxide fibers, calcium silicate fibers, thin titanate flakes, thin titanium oxide flakes and others.

The inorganic fillers can be used singly in a combination of two or more thereof. A silane coupling agent for a surface treatment may be used to cover the surface of a flame-retardant resin composition for the purpose of suppressing degradation of a matrix resin. No specific limitation is imposed on a content of an inorganic filler and a content of an inorganic filler is generally on the order in the range of from 0.01 to 50 parts by weight and preferably on the order in the range of from 1 to 20 parts by weight relative to 100 parts by weight of the resin in consideration of a balance between improvement on fire resistance and improvement on a mechanical strength, though a content thereof can be properly selected in a wide range according to various conditions such as a kind of a resin to be compounded, a quantity of usage of a flame retardant of the present invention, a kind and a content of another additive agent, an application for a flame-retardant resin composition to be obtained.

In a case where a flame-retardant resin composition of the present invention is used as materials of electrical and electronic parts, there can be used known inorganic fillers for resin and various kinds of additives, in addition to the above inorganic fillers used for improving a mechanical strength of a resin composition, for the purpose of improving various aspects of performance, which are electrical performance of a resin composition such as an insulating property, conductivity, anisotropic conductivity, a dielectric property, humidity resistance and others), thermal performance such as heat resistance, soldering heat resistance, thermal conductivity, a low thermally contracting property, a low thermally expanding property, a low stress property, thermal shock resistance, heat cycle resistance, reflow cracking resistance, storage stability, a temperature cycle property and others), workability/moldability (flowability, curability, an adhesion property, tackiness, a pressure sensitive adhesive property, a close contacting property, a under-fill property, a void-free property, an abrasion resistance, a lubricating ability, releasability, high elasticity, low elasticity, flexibility, a bendability and others). As known inorganic resin fillers and various kinds of additives for the above purpose, there can be used materials of spherical particles/powder: for example, fused silica, crystal silica, alumina, talc, aluminum nitride, born nitride, silicon nitride, titanium oxide, barium sulfate and others. Among them, especially preferable are materials of spherical particles/powder such as fused silica, crystal silica, alumina, aluminum nitride and others.

The inorganic fillers are generally used in a combination of two or more thereof in order to meet a plurality of required performance, but may be singly used. Furthermore, a silane coupling agent for a surface treatment may be used to cover the surface of a flame-retardant resin composition for the purpose of suppressing degradation of a matrix resin. In a case of materials for electrical and electronic parts, a content of an inorganic filler is generally on the order in the range of from 0.01 to 90 parts by weight and preferably on the order in the range of from 1 to 80 parts by weight relative to 100 parts by weight of the resin in consideration of a balance between improvement on fire resistance and improvement on a required electrical characteristic, though a content thereof can be properly selected in a wide range according to various conditions such as a kind of a resin to be compounded, a quantity of usage of a flame retardant of the present invention, a kind and a content of another additive agent, an application for a flame-retardant resin composition to be obtained.

Various kinds of flame retardants or dripping preventive agents can be incorporated into a flame-retardant resin composition of the present invention in a range in which preferable characteristics thereof are not lost at any degree. No specific limitation is placed on a kind of a flame retardant or a dripping preventive agent, but known agents for the purpose can be employed, there can be named: for example, phosphazene compounds other than those disclosed in the present invention, halogen containing organophosphoric compounds, halogen-free organophosphoric compounds, phosphorus as an element, inorganic flame retardant and others. The flame retardants or the dripping preventive agents in this case can be used singly or in a combination of two or more.

General resin additives can be further incorporated into a flame-retardant resin composition of the present invention in a range in which preferable characteristics thereof are not lost at any degree. No specific limitation is placed on a kind of the general resin additives, but there can be named: for example, ultraviolet absorbents such as benzophenone based, benzotriazole based, cyanoacrylate based, triazine based and others, a light stabilizing agent such as hindered amine based, anti-oxidants such as hindered phenol, organic phosphorus based peroxide decomposing agent, organic sulfur based peroxide decomposing agent and others; light intercepting agents such as rutile type titanium oxide, zinc oxide, chromium oxide, cerium oxide and others; metal deactivating agents such as benzotriazole based and others; quenching agents such as organic nickel compound and others; an anti-cloudness agent, an anti-mold agent, an antibacterial agent, a deodorant, a plasticizing agent, an antistatic agent, a surfactant, a polymerization inhibitor, a crosslinking agent, pigment, dye, sensitizer, a curing agent, a cure accelerator, diluent, a flowability adjusting agent, an anti-foaming agent, a blowing agent, a leveling agent, adhesive, an adhesiveness imparting agent, an antifriction agent, a release agent, lubricant, a nuclear agent, a reinforcing agent, a compatibility imparting agent, conductivity imparting agent, an anti-blocking agent, an anti-tracking agent, a light accumulating agent, various kinds of stabilizers and others.

Then, description will be given of preferred embodiments of a flame-retardant resin composition of the present invention.

(1) A flame-retardant resin composition containing at least one of phosphazene homopolymers each containing phosphazene compound having per molecule at least one vinyl group-substituted phenyl group, an allyl group-substituted phenyl group, a (metha)acryloyloxy(alkyl) group-substituted phenyl group and a (metha)acryloyl(alkyl) group-substituted phenyl group, in which the number of repeat units is 3 to 10000, and composite copolymers each including the phosphazene compound and a compound copolymerizable to the phosphazene compound; in the range of from 0.1 to 70 parts by weight (and preferably in the range of 0.5 to 50 parts by weight) of the homopolymer and/or copolymer and 100 parts by weight of a thermoplastic resin or a thermoset resin.

(2) A flame-retardant resin composition containing at least one of phosphazene homopolymer each containing phosphazene compound and having per molecule at least one vinyl group-substituted phenyl group, an allyl group-substituted phenyl group, a (metha)acryloyloxy(alkyl) group-substituted phenyl group, and a (metha)acryloyl(alkyl) group-substituted phenyl group, in which the number of repeat units is 3 to 10000, and composite copolymers each including the phosphazene compound and a compound copolymerizable to the phosphazene compound; in the range of from 0.1 to 70 parts by weight (and preferably in the range of 0.5 to 50 parts by weight) of the homopolymer and/or copolymer and an inorganic filler, and/or fluororesin in the range of from 0.01 to 50 parts by weight (preferably in the range from 1 to 20 parts by weight) in the range of from 0 to 2.5 parts by weight ( preferably in the range from 0 to 1.2 parts by weight), respectively, and 100 parts by weight of a thermoplastic resin or a thermoset resin.

(3) A flame-retardant curing resin composition obtained by curing the flame-retardant resin composition of the above (1) or (2) with heat or energy rays such as ultraviolet rays or electron rays.

A flame-retardant resin composition of the present invention can be produced by mixing and/or kneading prescribed quantities or proper quantities of a flame retardant of the present invention and, when required, fluororesin, an inorganic filler, other flame retardants and other additives, respectively, into a thermoplastic resin or a thermoset resin according to a known method. For example, a mixture composed of components in the form of powder, beads, flakes or pellets has only to be mixed and/or kneaded into a resin using an extruder such as a single screw extruder, a double screw extruder or the like, a Banbury mixer, a pressure kneader, or a kneader with a twin-roll type, a three-roll type or the like.

A flame-retardant resin composition of the present invention can be molded into a molded article of any shape such as a resin board of a single layer structure or a multilayer structure, a sheet, a film, a sphere, a flat square, articles of other shape, or the like by cure molding according to a known method such as press molding, injection molding, extrusion molding, cast molding or the like, or by heating or illumination with ultraviolet rays or electron rays depending on an application.

A flame-retardant resin composition of the present invention can be applied to various kinds of fields where a resin can be used: for example, electrical, electronic and communications equipment, precision equipment, a transportation equipment such as an automobile, fiber products, fabrication machines, food packaging films and containers, articles associated with agriculture, forest and fishery, materials for building, medical supplies, components of furniture and others.

As actual applications, there are named: in electrical, electronic and communication equipment, for example, a printer, a computer, a word processor, a key board, a personal digital assistant (PDA), a telephone, a portable telephone, a facsimile machine, a copier, an electronic cash register (ECR), a hand held calculator, an electronic notepad, an electronic dictionary, a card, a holder, an administrative and OA equipment including stationary, home electrical appliance such as a washer, a refrigerator, a cleaner, a microwave oven, a lighting fixture, a game machine, an iron and electric foot warmer, AV equipment such as a television set, VTR, a video camera, camcorder, a radio cassette player, a tape recorder, a mini-disk player, a CD player, a DVD player, an LD player, a speaker, a liquid crystal display,

and its driver, an EL display, a plasma display and others, electrical and electronic parts such as a connector, a relay, a capacitor, a switch, a printed board material, a coil bobbin, a semiconductor encapsulation material, a battery and its separator or its sealing material, CCD, LED, an electric wire, a cable, a transformer, a motor, an antenna coil, a deflection york, a distribution board, a clock and others, and communication equipment such as non-contact data carrier package system, a smart card/a smart tag and others.

Then, detailed description will be given of applications for the flame-retardant resin composition as materials of electrical and electronic parts.

As materials or intermediates of a printed board, there are named: a prepreg obtained by impregnating a board made of glass, paper, an aramid fiber cloth or the like with a flame-retardant resin composition of the present invention and a wiring board (glass/paper/aramid) obtained by machining a prepreg, a copper clad laminate, a composite copper clad laminate, a flexible copper clad laminate, a build-up type multilayer printed wiring board, a carrier-provided resin film, a flexible printed wiring board, a bonding sheet and others. In addition, a printed board material using a flame-retardant resin composition of the present invention can be preferably used even as any type among printed board materials, ranging from a rigid type to a flexible type, and from a sheet and a film to a plate in shape, according to known methods without a limit imposed thereon.

In company with recent trends toward a compact size, a large capacity and a multifunctionality of electric and electronic equipment, a printed wiring board has been transformed into a multilayer structure and needs have been arisen for function-imparted films (layers) such as a resin layer, which is each of interlayer resin layers between layers imparted with an insulating property (an interlayer insulating film (or layer) and an insulating adhesive agent layer); a resin layer, which is each of interlayer resin layers between layers imparted with conductivity or anisotropic conductivity (an interlayer conductive film (or layer), a conductive adhesive agent layer, an interlayer anisotropic conductive film (or layer) and an anisotropic conductive adhesive agent layer); and a dielectric constant controlled or conductivity controlled film (or layer). Other needs have also arisen for an adhesive agent (pressure sensitive adhesive) layer for mutually adhering or sticking an IC element, parts such as a solder ball, a lead frame, heat spreader, a stiffener, and the above function-imparted film (or layer) to each other; and also for a surface protective layer such as a cover lay film. Furthermore, needs have also arisen for function-imparted layers such as a resin bump (including resin-coated bump), a conductive resin layer inside a through-hole, and furthermore, a stress relaxation resin layer formed for the purpose of protecting an element from various kinds of thermal and mechanical external stresses. A flame-retardant resin composition of the present invention can be preferably used in various kinds of interlayer forming layer and parts without a limitation imposed thereon.

A flame-retardant resin composition of the present invention includes: a flame-retardant curing resin composition curable by heat or energy rays such as ultraviolet rays or electron rays. Some of flame-retardant curing resin compositions can be preferably used especially in a solder resist material (solder resist ink) that can be developed and printed by energy rays, a transparent conductive ink for EL, a patterning ink used for TFT liquid crystal and others.

As for the above semiconductor encapsulating materials, there have been various kinds of encapsulating materials and performance required for the encapsulating materials changes in various ways since there are different mounting methods of a semiconductor element (for example, a lead frame package, surface mounting packages represented by SOP (Small Outline Package), SOJ (Small Outline J-leaded Package), QFP type (Quad Flat Package), BGA (Ball Grid Array) and various kinds of small scaled CSPs (chip size package)); various kinds of connection methods with a circuit (wire bonding, TAB (Tape Automated Bonding) connection, a flip chip connection and others); and further, various kinds of processes. A condition and state of an encapsulating resin has been changed from a solid state used as a conventional molding compound to a liquid encapsulating material of a capillary flow type used as an under fill material, to secondary under-fill material for secondary mounting, and to encapsulating materials in film or paste such as ACF (Anisotropic Conductive Film), NCF (Non Conductive Film), ACP (Anisotropic Conductive Paste) and NCP (Non Conductive Paste) of a compression flow type used in pressure welding. A flame-retardant resin composition of the present invention can be preferably used in any type of encapsulating materials without a limitation imposed thereon and a fire resistance of a encapsulating resin can be sufficiently exerted when used without degrading performance required for the encapsulating material.

As for battery sealing parts, transformer insulating material, motor insulating material and antenna coil insulating material, the resin is especially called casting material since the resin is cast in a mold for sealing. A casting material requires various kinds of performance such as a high heat dissipating ability (thermal conductivity), heat resistance and thermal shock resistance. A flame-retardant resin composition of the present invention can be preferably used without a limitation imposed thereon in the application as a casting material as well.

In the recent movement associated with environmental problems, lead-free solder has been required and proposals of lead-free solders include Sn/Ag/Cu solder, Sn/Ad/(Bi) solder, Sn/Zn/(Bi) solder, Sn/Ag/Cu/Bi solder and others, wherein a flow or reflow temperature thereof is higher than those of a general Pb/Sn based eutectic solder by 10 to 20°C. Therefore, improvement is desired on heat resistance of a resin used in electrical and electronic parts as board material or an encapsulating material. Since a flame-retardant resin composition of the present invention is a

composition made of a compound obtained by a reaction of polymerizable compounds and has a characteristic of high heat resistance, the composition can also be preferably used in electrical and electronic parts requiring especially heat resistance without a limitation imposed thereon. In optical material applications represented by various displays such as a liquid crystal display, an EL display, a plasma display, an active matrix liquid crystal display and others; and optical coupling semiconductor device such as a photo-coupler, and opto-isolator and others as well, a flame-retardant resin composition of the present invention can also be preferably used without a limitation imposed thereon. To be detailed, there are exemplified resin parts or members such as adhesive agent (layers), insulating layers, spacers and sealing material between structural members for a construction including a polarizing plate/a glass substrate/a (transparent) electrode substrate/an orientation film/ a liquid crystal layer/a filter/a reflective plate/a conductive substrate/an electrode conductive film/a barrier layer or the likes.

Furthermore, in other applications, there are exemplified the following items, which are: various kinds of packing in and a top cloth of a chair or a seat; a belt, ceiling and wall boards, a convertible top, an arm rest, a door trim board, a rear package tray, a carpet, a mat, a sun visor, a wheel cover, a mattress cover, an air bag, an insulating material, a hand grasp, a hand strap, wire covering material, electrically insulating material, paint, paint for an inner surface of a can, paint for a can lid, adhesive agent, a touch panel, a hearing aid, coating material, ink (toner); materials for an automobile, a vehicle, a ship, a bridge, an air plane and civil engineering and building such as sealing material, facing material, flooring, a corner wall, a carpet, wall paper, wall facing material, outer facing material, inner facing material, roofing, a sound insulating board, heat insulating board, window shade or curtain, sealing material to fill a clearance between a window glass and frame, anticorrosive material around water facilities, anticorrosive material for concrete; clothes, curtain, bed sheets, plywood, a synthetic fiber plate, carpet, a main entrance mat, food package film and container; composite materials for fields of agriculture, forest and fishery, medical supplies and aerospace use; a sheet, a bucket, a hose, a container, eyeglasses, a bag, a case, goggles, a ski, a snowboard, a skateboard, a racket, a tent; and equipment and supplies for daily life and sports.

## Examples

Then, there will be shown synthetic examples, examples and comparative examples and furthermore, description will be given of the present invention using the synthetic examples and others. Evaluation of various aspects of performance was performed according to the following schemes.

### 1. Thermal Deformation Temperature

The temperature was measured in conformity with ASTM D-648 with a load of 1.80 Mpa, which is used as an index for heat resistance.

### 2. Fire Resistance

A test piece of a size of 1/16 inch in thickness, 5 inch in length and 0.5 inch in width was prepared and an evaluation test for fire resistance was applied to the test piece according to UL-94 standard (Test for Flammability of Plastic Materials for Parts in Devices and Appliances UL94, Fourth Edition). Definitions of terms and evaluation criteria used in UL94 are as follows:

[Definitions of Terms]

Afterflame is that flaming (burning with a flame) of a material after contact of a flame (after removing an igniter) is sustained.

An afterflame time is a length of a time during which a material is burning with a flame after contact of a flame under test conditions.

Afterglow is that after flaming is over or after contact of a flame unless flaming occurs, glowing of a material (though not burned with a flame, being kept in a red heat state serving as an igniter) is sustained as is.

An afterglow time is a length of a time during which after contact of a flame and/or after flaming is over, a material is kept in a red heat state serving as an igniter.

t1 is an afterflame time after a first flaming operation,
t2 is an afterflame time after a second flaming operation and
t3 is an afterglow time after the second flaming operation.

[Evaluation Criteria]

94 V-0

(1) afterflame times t1 or t2 of each of test pieces is 10 sec or less,
(2) the sum (t1 + t2) of afterflame times of 5 test pieces is 50 sec or less,
(3) the sum (t2 + t3) of an afterflame time and an afterglow time of each of test pieces after the second flaming operation is 30 sec or less,
(4) afterflame or afterglow of any test piece does not reach a fixation clamp, and
(5) a sign of cotton is not ignited by a flaming particle or droppings.

As thermoplastic resin, thermoset resin and fluororesin, the following resins were employed:
Aromatic polycarbonate resin made by Mitsubishi Engineering Plastics Corp with a trade name of Iupilon S-2000N
ABS resin made by Mitsui Chemicals, Inc. with a trade name of Santac UT-61,

Modified PPE resin (PPE/HIPS) made by Asahi Kasei Corporation with a trade name of Xyron X-9108,
Epoxy resin: cresol novolak epoxy resin with an epoxy equivalent of 200 and a softening point of 67°C,
Phenol resin: phenol novolak resin with a hydroxyl equivalent of 106 and a softening point of 83°C and
Polytetrafluoroethylene (PTFE) made by Asahi Glass Co., Ltd. with a trade name of G-307.

Synthetic example 1 (synthesis of a raw material phosphazene)

Into a 10L flask equipped with a reflux condenser, a thermometer, a stirrer, a phosphorous trichloride dropper and a chlorine gas blowing pipe, 5 L of chlorobenzene, 365 g (6.8 mol) of ammonium chloride and 5.0 g of zinc chloride were put to obtain a mixed dispersion liquid. The dispersion liquid was heated to a temperature of 130°C and 851 g of phosphorous trichloride was dropped thereinto at the temperate under reflux at a feed rate of 8.9 g/min over 96 min and 454 g of chlorine gas was simultaneously fed thereinto at a feed rate of 4.7 g/min over 96 min. After phosphorous trichloride and chlorine gas were fed, the dispersion liquid was refluxed at temperature of 132°C for another 144 min to complete a reaction. Then, the dispersion liquid was subjected to suction filtration to remove non-reacted ammonium chloride and a filtrate was distilled under a reduced pressure of 1.3 to 2.7 hPa at 30 to 40°C to remove chlorobenzene as a distillate and to obtain 704 g of a reaction product. A yield of the reaction product was 98.1% relative to the dropped phosphorous trichloride. The reaction product was dissolved into chlorobenzene and recrystallization was performed to obtain 452 g of a mixture of 76% hexachlorocyclotriphosphazene and 24% octachlorocyclotetraphosphazene. A residual chlorobenzene solution left after recryatallization is concentrated to obtain 294 g of a cyclic and linear chlorophosphazene (a mixture obtained by replacing $R^1O$- group and $R^2O$- group each with a chlorine atom in which n is 3 to 15). Furthermore, the mixture of hexachlorocyclotriphosphazene and octachlorocyclotetraphosphazene previously obtained were recrystallized three times with hexane to obtain 312 g of hexachlorocyclotriphosphazene of a purity 99.9%.

Synthesis Example 2 (synthesis of phosphazene having a hydroxy group)

Into a 2 L four-necked flask equipped with a reflux condenser, a thermometer, a stirrer and a dropping funnel, 116 g (1 unit mol, $NPCl_2$ is 1 unit) of hexachlorocyclotriphosphazene of a purity 99.9% and 200 mL of tetrahydrofuran were put to obtain a solution. Then, a tetrahydrofuran (THF) solution of 4-methoxyphenol sodium salt separately prepared (297.9 g (2.4 mol) of 4-methoxyphenol, 50.6 g (2.2 g-atom) of sodium and 1200 mL of tetrahydrofuran) was dropped while stirring into the THF solution of hexachlorocyclotriphosphazene over 2 hours. There were observed a violent heat release till about one-third of the sodium salt is added and, during the period, the dropping reaction was performed while cooling the solution. Though no violent exothermic reaction occurred during a period when residual two-third thereof was dropped, the reaction was caused while properly cooling the solution so that a reaction temperature was held at 30°C or lower. After the dropping, the reaction was successively continued for another 12 hours at room temperature while stirring the solution. Then, the reaction was further continued under reflux of a solvent for still another 6 hours for complete the reaction. After completion of the reaction, the solvent THF was removed as a distillate under a reduced pressure, then 1 L of toluene was added to the residue of distillation to dissolve and 1 L of water was added, followed by separation of an organic layer in a separatory funnel. The organic layer was washed with 1L of 5% sodium hydroxide aqueous solution three times, then washed with 1 L of (1 + 9) hydrochloric acid aqueous solution

once, further washed with 1L of 5% sodium bicarbonate aqueous solution once and finally washed with 1 L of water twice. A pH value of a water layer at the time when the last washing with water was over was a value from 7 to 8. An organic layer was separated and dehydrated with anhydrous magnesium sulfate, followed by removal of toluene as a distillate to obtain 285.5 (at a yield of 98%) of hexa(4-methoxyphenoxy) cyclotriphosphazene as a yellow solid. A residual chlorine quantity was at 0.02% and a melting pint was at 103°C (103 to 104°C in a literature).

Into a 2 L four-necked flask, 262.1 g (0.9 unit mole) of hexa(4-methoxyphenoxy) cyclotriphosphazene obtained according to the above process and 2080 g (18 mol) of pyridine hydrochloric acid salt were put and a temperature of a mixture is gradually raised, followed by a reaction at a temperature in the range of from 205 to 210°C for 1 hour. After cooling the mixture down to room temperature, 300 mL of water was added thereto to dissolve a reaction product and pyridine hydrochloride acid salt in excess and further a pH value of the mixture was adjusted with a 20% sodium hydroxide aqueous solution to prepare a reaction solution with a pH value of from 6 to 7. Then, extraction was performed on the reaction solution with 1 L of ethyl acetate 4 times, thereafter the collected extracts were combined and washed with 1 L of water saturated with sodium sulfate four times, an organic layer was separated and the organic layer was dehydrated with anhydrous magnesium sulfate, followed by removal of ethyl acetate under a reduced pressure as distillate. Then, the concentrate was dissolved into 300 ml of methanol and the solution was added into 3 L of water to thereby precipitate a crystal, which process was repeated three times, followed by vacuum drying the crystal obtained by the precipitation to obtain 199.0 g (a yield of 84%) of a light yellow crystal. A residual chlorine quantity in the product is at 0.01% or lower and a quantity of hydroxyl group (OH in %) was quantified according to acetylation method using acetic anhydride and pyridine described on page 316 in Analytical Chemistry Handbook, organic version (compiled by Society of Japan Analytical Chemistry) to obtain a value of 12.8% (the theoretical value of 12.9% in a compositional formula $N_3P_3(OC_6H_4OH)_6$. The synthesis of the compound was confirmed by performing $^1$H- and $^{31}$P- NMR analysis. A melting point was at 239°C.

Synthesis Example 3 (synthesis of phosphazene having a hydroxy group)

A 4-methoxyphenoxy derivative was obtained in a similar method to Synthesis Example 2 except for use of 116 g (1 unit mol) of the mixture of 82% hexachlorocyclotriphosphazene and 18% octachlorocyclotetraphosphazene obtained in Synthesis Example 1. An obtained quantity was 283.2 g at a yield of 97%, a residual chlorine quantity was 0.03% and a state was a sold in light yellow.

A methyl group was removed in a similar method to Synthesis Example 2 except for use of 262.1 g (0.9 unit mol) of the 4-methoxyphenoxy derivative obtained as above. The obtained product was a light brown solid and a quantity thereof was 210.4 g at a yield of 80%. A residual chlorine quantity of the product is at 0.01% or lower and the synthesis of the compound was confirmed by performing $^1$H- and $^{31}$P- NMR analysis. A hydroxyl group content was 12.7%.

Synthesis Example 4 (synthesis of phosphazene having a hydroxy group)

A 4-methoxyphenoxy derivative was obtained in a similar method to Synthesis Example 2 except for use of 116 g (1 unit mol) of the cyclic and linear chlorophosphazene obtained in Synthesis Example 1. An obtained quantity was 283.0 g at a yield of 97%, a residual chlorine quantity was 0.05% and a state was a high viscosity liquid in light yellow.

A methyl group was removed in a similar method to Synthesis Example 2 except for use of 262.1 g (0.9 unit mol) of the 4-methoxyphenoxy derivative obtained as above. The obtained product was a light brown high viscosity liquid and a quantity thereof was 205.1 g at a yield of 78%. A residual chlorine quantity of the product is at 0.01% or lower and the synthesis of the compound was confirmed by performing $^1$H- and $^{31}$P- NMR analysis. A hydroxyl group content was 12.6%.

Synthesis Example 5 (synthesis of phosphazene having hydroxy groups at some but not all sites)

Into a 2 L four-necked flask equipped with a reflux condenser, a thermometer, a stirrer and a dropping funnel, 116 g (1 unit mol, $NPCl_2$ is 1 unit) of hexachlorocyclotriphosphazene of a purity 99.9% and 200mL of THF were put to obtain a solution. Then, a THF solution of 4-methoxyphenol sodium salt prepared separately (126.5 g (1.1 mol) of 4-methoxyphenol, 23 g (1 g-atom) of sodium and 400 mL of tetrahydrofuran) was dropped while stirring into the THF solution of the hexachlorocyclotriphosphazene over 1 hour. Since there were observed a violent heat release, the reaction was performed while properly cooling the solution so that a reaction temperature was held at 30°C or lower. After the dropping, the reaction was successively continued for another 6 hours at 60°C while stirring the solution. A residual chlorine quantity of a partially substituted compound obtained by the reaction was at 17.20% and an estimated structure thereof was $N_3P_3Cl_{2.98}(OC_6H_4OCH_3)_{3.02}$.

ATHF solution of sodium phenolate prepared separately (122.3 g (1.3 mol) of phenol, 28.8 g (1.2 mol) of sodium and 400 ml of THF) was dropped into the solution of the partial substituted compound over 1 hour while controlling a reaction temperature so as to be at 30°C or lower by cooling. Then, the reaction was performed for 5 hours at room temperature and further for another 3 hours at a reflux temperature to complete the reaction. After completion of the reaction, THF as a solvent was removed under a reduced pressure as a distillate and 1 L of toluene was added to the product to dissolve, 500 mL of water was added to wash the product, followed by liquid separation. An organic layer was washed with a 5% sodium hydroxide aqueous solution once and further with a 2% sodium hydroxide aqueous solution once, and thereafter, washed with a (1 + 9) hydrochloric acid aqueous solution once, washed with 5% sodium bicarbonate aqueous solution once, and washed with water two times to cause a pH value of a water layer to be neutral. Then an organic layer was separated and the organic layer was dehydrated with anhydrous magnesium sulfate, followed by removal of toluene under a reduced pressure as distillate to obtain 257.6 g (at a yield of 98.6%) of a product in a light yellow oily state. A residual chlorine quantity is 0.01% or lower.

Into a 2 L four-necked flask, 261.2 g (1 unit mole) of a cyclotriphosphazene substituted with a 4-methoxyphenoxy group and a phenoxy group obtained according to the above process and 1167.1 g (10.1 mol) of pyridine hydrochloric acid salt were put and a temperature of a mixture is gradually raised, followed by a reaction at a temperature in the range of from 205 to 210°C for 1 hour. Operations thereafter were performed similarly to Synthesis Example 2 to obtain 217.2 g of a yellow solid at a yield of 88%. A residual chlorine quantity is 0.01% or lower, a hydroxyl group content was 6.8% (a theoretical value of 6.9% and a compositional formula of $N_3P_3(OPh)_{2.98}(OC_6H_4OCH)_{3.02}$).

Synthesis Example 6 (synthesis of phosphazene having hydroxyethyl groups at some but not all sites)

Into a 2 L four-necked flask equipped with a reflux condenser, a thermometer, a stirrer and a dropping funnel, 116 g (1 unit mol, $NPCl_2$ is 1 unit) of hexachlorocyclotriphosphazene of a purity 99.9% and 200mL of THF were put to obtain a solution. Then, a THF solution of phenol sodium salt prepared separately (103.5 g (1.1 mol) of phenol, 23 g (1 g-atom) of sodium and 400 mL of tetrahydrofuran) was dropped while stirring and cooling into the THF solution of hexachlorocyclotriphosphazene over 1 hour. After the dropping, the reaction was successively continued for another 6 hours at 60°C while stirring the solution. A residual chlorine quantity of a partially substituted compound obtained by the reaction was 20.25% and an estimated structure thereof was $N_3P_3Cl_{2.98}(OC_6H_5)_{3.02}$.

A THF solution of 4-hydroxyethyl phenolate prepared separately (179.6 g (1.3 mol) of 4-hydroxyethyl phenol, 28.8 g (1.2 mol) of sodium and 400 ml of THF) was dropped into the solution of the partially substituted compound over 1 hour while controlling a reaction temperature so as to be at 30°C or lower by cooling. Then, the reaction was performed for 5 hours at room temperature and further for another 6 hours at a reflux temperature to complete the reaction. After completion of the reaction, THF as a solvent was removed under a reduced pressure as a distillate and 1 L of toluene was added to the product to dissolve, 500 mL of water was further added to wash the product, followed by separation. An organic layer was washed with a 5% sodium hydroxide aqueous solution once and further washed with a 2% sodium hydroxide aqueous solution once, and thereafter, washed with a (1 + 9) hydrochloric acid aqueous solution once, washed with 5% sodium bicarbonate aqueous solution once, and washed with water two times to cause a pH value of a water layer to be neutral. Then an organic layer was separated and dehydrated with anhydrous magnesium sulfate, followed by removal of toluene under a reduced pressure as distillate to obtain 253.5 g (at a yield of 92%) of a product in a light yellow oily state. A residual chlorine quantity of the product is 0.01% or lower and the synthesis of the compound was confirmed by performing $^1$H- and $^{31}$P-NMR analysis. A hydroxyl group content was 6.1% (a theoretical value of 6.2% and a compositional formula of $N_3P_3(OPh)_{2.98}(OC_6H_4CH_2CH_2OH)_{3.02}$).

Synthesis Example 7 (synthesis of phosphazene having an acryloyloxy group)

Into a 1 L reactor equipped with a stirrer, a reflux condenser and a thermometer, 78.9 g (0.3 unit mol) of hexa (4-hydroxyphenoxy) cyclotriphosphazene, 57.0 g (0.63 mol) of acrylic chloride, 200 g of synthetic zeolite (3A) and 700mL of acetonitrile were put and a reaction was caused for 24 hours under reflux. After the reaction ends, synthetic zeolite was removed by filtration and a filtrate was concentrated to obtain 108.0 g (at a yield of 97%) of a yellow solid. It was confirmed that no hydroxyl group was remained by means of the acetylation method. It was confirmed that a hydroxy group was changed to an acryloyloxy group by performing $^1$H- and $^{31}$P-NMR analysis.

Synthesis Example 8 (synthesis of phosphazene having a methacryloyloxy group)

Phenoxyphosphazene having a methacryloyloxy group was obtained to a weight of 115.0 g (at a yield of 96%) in a yellow solid state in a similar process to Synthesis Example 7 except for use of 78.9 g ( 0.3 unit mol) of a mixture of cyclotriphosphazene and cyclotetraphosphazene each having a hydroxy group obtained in Synthesis Example 3 and 65.9 g (0.63 mol) of methacrylic chloride. It was confirmed that no hydroxyl group was remained by means of the acetylation method. It was confirmed that a hydroxy group was changed to a methacryloyloxy group by performing $^1$H- and $^{31}$P-NMR analysis.

Synthesis Example 9 (synthesis of phosphazene having a methacryloyloxy group)

Phenoxyphosphazene having a methacryloyloxy group was obtained to a weight of 112.6 g (at a yield of 94%) in a yellow solid state in a similar process to Synthesis Example 7 except for use of 78.9 g (0.3 unit mol) of a mixture of cyclic and linear phosphazenes obtained in Synthesis Example 4 and 65.9 g (0.63 mol) of methacrylic chloride. It was confirmed that no hydroxyl group was remained by means of the acetylation method. It was confirmed that a hydroxy group was able to be changed to a methacryloyloxy group by performing $^{1}$H- and $^{31}$P-NMR analysis.

Synthesis Example 10 (synthesis of phosphazene having an acryloyloxy group)

Phenoxyphosphazene having an acryloyloxy group was obtained to a weight of 87.8 g (at a yield of 97%) in a yellow solid state in a similar process to Synthesis Example 7 except for use of 73.7 g (0.3 unit mol) of phosphazene having hydroxy groups at some but not all sites obtained in Synthesis Example 5 and 29.0 g (0.32 mol) of acrylic chloride. It was confirmed that no hydroxyl group was remained by means of the acetylation method. It was confirmed that a hydroxy group was able to be changed to an acryloyloxy group by performing $^{1}$H- and $^{31}$P-NMR analysis.

Synthesis Example 11 (synthesis of phosphazene having an acryloyloxy group)

Phenoxyphosphazene having an acryloyloxy group was obtained to a weight of 97.0 g (at a yield of 98%) in a yellow solid state in a similar process to Synthesis Example 7 except for use of 82.4 g (0.3 unit mol) of phosphazene having hydroxyethyl groups at some but not all sites obtained in Synthesis Example 6 and 29.0 g (0.32 mol) of acrylic chloride. It was confirmed that no hydroxyl group was remained by means of the acetylation method. It was confirmed that a hydroxy group was able to be changed to a acryloyloxy group by performing $^{1}$H- and $^{31}$P-NMR analysis.

Synthesis Example 12 (synthesis of a flame retardant (A))

Into a 1 L reactor equipped with a stirrer, a reflux condenser, a nitrogen gas introducing apparatus and a thermometer, 50.0 g of phosphazene having an acryloyloxy group obtained in Synthesis Example 7, 0.5 g of azobisisobutyronitrile and 200 mL of THF were put to form a homogeneous solution. The solution was heated to 70°C and subjected to polymerization at the temperature for 3 hours in an atmosphere formed by introduction of nitrogen gas. The obtained reaction liquid was concentrated, methanol in great excess was added thereinto, precipitated solid was filtrated out and the precipitated solid was vacuum dried at 60° for 12 hours to obtain 47.2 g of a light yellow powdery polymer (a flame retardant (A)) as a phosphazene homopolymer. An IR spectrum of the product confirmed that a double bond disappeared and a phosphazene oligomer or polymer was produced.

Synthesis Example 13 (synthesis of a flame retardant (B))

Into a 1 L reactor equipped with a stirrer, a reflux condenser, a nitrogen gas introducing apparatus and a thermometer, 10.0 g of phosphazene having a methacryloyloxy group obtained in Synthesis Example 8, 40.0 g of styrene, 0.5 g of azobisisobutyronitrile and 200 mL of THF were put to form a homogeneous solution. The solution was heated to 70°C and subjected to polymerization at the temperature for 3 hours in an atmosphere formed by introduction of nitrogen gas. The obtained reaction liquid was concentrated, methanol in great excess was added thereinto, precipitated solid was filtrated out, the precipitated solid was vacuum dried at 60°C for 12 hours to obtain 47.9 g of a light yellow powdery polymer (a flame retardant (B)) as a phosphazene composite copolymer. An IR spectrum of a product confirmed that double bonds disappeared and a phosphazene oligomer or polymer was produced by a reaction as a copolymerization component (structural unit) of styrene.

Synthesis Example 14 (synthesis of a flame retardant (C))

A yellow solid (a flame retardant (C)) as a phosphazene composite copolymer was obtained to a weight of 46.9 g in a similar process to Synthesis Example 13 except for use of 10.0 g of phosphazene having a methacryloyloxy group obtained in Synthesis Example 9 and 40.0 g of methyl methacrylate. An IR spectrum of a product confirmed that double bonds disappeared and a phosphazene oligomer or polymer was produced by a reaction as a copolymerization component of methyl methacrylate.

Synthesis Example 15 (synthesis of a flame retardant (D))

A yellow solid (a flame retardant (D)) as a phosphazene homopolymer was obtained to a weight of 48.2 g in

a similar process to Synthesis Example 12 except for use of phosphazene having an acryloyloxy group obtained in Synthesis Example 10. An IR spectrum of a product confirmed that double bonds disappeared and a phosphazene oligomer or polymer was produced.

Synthesis Example 16 (synthesis of a flame retardant (E))

A yellow solid (a flame retardant (E)) as a phosphazene composite copolymer was obtained to a weight of 48.1 g in a similar process to Synthesis Example 13 except for use of phosphazene having an acryloyloxy group obtained in Synthesis Example 10. An IR spectrum of a product confirmed that double bonds disappeared and a phosphazene oligomer or polymer was produced by a reaction as a copolymerization component of styrene.

Synthesis Example 17 (synthesis of a flame retardant (F))

A yellow solid (a flame retardant (F)) as a phosphazene composite copolymer was obtained to a weight of 47.6 g in a similar process to Synthesis Example 14 except for use of phosphazene having an acryloyloxy group obtained in Synthesis Example 10. An IR spectrum of a product confirmed that double bonds disappeared and a phosphazene oligomer or polymer was produced by a reaction as a copolymerization component of methyl methacrylate.

Synthesis Example 18 (synthesis of a flame retardant (G))

A yellow solid (a flame retardant (G)) as a phosphazene homopolymer was obtained to a weight of 48.8 g in a similar process to Synthesis Example 12 except for use of phosphazene having an acryloyloxy group obtained in Synthesis Example 11. An IR spectrum of a product confirmed that double bonds disappeared and a phosphazene oligomer or polymer was produced.

Synthesis Example 19 (synthesis of a flame retardant (H))

A yellow solid (a flame retardant (H)) as a phosphazene composite copolymer was obtained to a weight of 48.2 g in a similar process to Synthesis Example 13 except for use of phosphazene having an acryloyloxy group obtained in Synthesis Example 11. An IR spectrum of a product confirmed that double bonds disappeared and a phosphazene oligomer or polymer was produced by a reaction as a copolymerization component of styrene.

Synthesis Example 20 (synthesis of a flame retardant (I))

A yellow solid (a flame retardant (I)) as a phosphazene composite copolymer was obtained to a weight of 48.8 g in a similar process to Synthesis Example 14 except for use of phosphazene having an acryloyloxy group obtained in Synthesis Example 11. An IR spectrum of a product confirmed that double bonds disappeared and a phosphazene oligomer or polymer was produced by a reaction as a copolymerization component of methyl methacrylate.

Synthetic example 21 (synthesis of a flame retardant (J))

Into a 1L four-necked flask equipped with a stirrer, a thermometer and a reflux condenser, 123.0 g (1.3 mol) of phenol was put and further 500 ml of THF was put to form a homogeneous solution. Then, 27.6 g of metallic sodium was put into the solution at a temperature of 25°C or lower and thereafter, a temperature of the solution was raised to 61°C over 1 hour, followed by stirring the solution at a temperature from 61 to 68°C for 6 hours, thereby preparing a sodium phenolate solution.

In parallel to the above reaction, 58.0 g (0.5 unit mol) of a mixture of hexachlorocyclotriphosphazene and octachlorocyclotetraphosphazene (76% a trimer and 24% a tetramer) were dissolved into 250mL of THF in a 2 L four-necked flask and the sodium phenolate solution prepared as described above was dropped into the solution of the mixture in a state being stirred at a temperature of 25°C or lower. After the dropping ends a reaction was caused in the mixture solution at a temperature from 71 to 73°C for 15 hours while stirring. After the reaction ends, the reaction mixture was concentrated and further dissolved into 500 ml of toluene, thereafter washed with water, washed with a 5% sodium hydroxide acid aqueous solution three times, washed with a 5% hydrochloric aqueous solution, washed with a 5% sodium bicarbonate aqueous solution and washed with water three times, followed by concentration and drying of the mixture solution to obtain 109 g (at a yield of 94%) of a light yellow solid (flame retardant (J)).

A residual chorine (Hy-Cl) was 0.07% and it was confirmed that the product was the following compound by performing $^1H$- and $^{31}P$-NMR analysis:

$[N = P(-OPh)_2]_{3,4}$.

Example 1

Ten parts by weight (hereinafter simply referred to as "parts") of a flame retardant (A) and 0.5 part of polytetrafluoroethylene (PTFE) were added to 100 parts of a resin (PC/ABS) composed of 75 parts of aromatic polycarbonate resin and 25 parts of ABS resin, the mixture was further mixed in a mixer, fused and kneaded using a 25 mm twin-roll kneader to obtain a flame-retardant resin composition.

The composition was prepared into a test piece of 1/16 inch in thickness by means of injection molding and the test pieces was subjected to evaluation on fire resistance on the basis of the test method of UL-94 and measurement of a thermal deformation temperature in conformity with ASTM D-648. As results of the evaluation and measurement, fire resistance was at the level of V-0 and a thermal deformation temperature was 117°C and neither of juicing and mold deposit (MD) phenomena was recognized. The results are shown in Table 1.

Table 1

| | resin 100 parts | flame retardant | | | thermal | juicing | MD |
|---|---|---|---|---|---|---|---|
| | | types | compounding quantity | fire resistance | deformation temperature | | |
| example 1 | PC/ABS | A | 10 | V-0 | 117 | absence | absence |
| example 2 | PC/ABS | B | 10 | V-0 | 114 | absence | absence |
| example 3 | PC/ABS | C | 10 | V-0 | 115 | absence | absence |
| example 4 | PC/ABS | D | 10 | V-0 | 119 | absence | absence |
| example 5 | PC/ABS | E | 10 | V-0 | 113 | absence | absence |
| example 6 | PC/ABS | F | 10 | V-0 | 116 | absence | absence |
| example 7 | PC/ABS | G | 10 | V-0 | 118 | absence | absence |
| example 8 | PC/ABS | H | 10 | V-0 | 112 | absence | absence |
| example 9 | PC/ABS | I | 10 | V-0 | 115 | absence | absence |
| example 10 | m-PPE | E | 15 | V-0 | 130 | absence | absence |
| example 11 | m-PPE | F | 15 | V-0 | 132 | absence | absence |
| example 12 | m-PPE | H | 15 | V-0 | 134 | absence | absence |
| example 13 | ABS | E | 25 | V-0 | 83 | absence | absence |
| example 14 | ABS | F | 25 | V-0 | 82 | absence | absence |
| example 15 | ABS | H | 25 | V-0 | 85 | absence | absence |
| comparative example 1 | PC/ABS | J | 10 | V-0 | 105 | presence | presence |
| comparative example 2 | m-PPE | J | 15 | V-0 | 111 | presence | presence |
| comparative example 3 | ABS | J | 25 | V-0 | 75 | presence | presence |

Examples 2 to 9

Preparation of specimens and evaluation thereof were performed similarly to Example 1 except for use of the flame retardants (B) to (I) instead of the flame retardant (A). Results thereof are shown in Table 1.

As for examples 2 to 9 as well, the results were similar to those of example 1.

Comparative Example 1

Preparation of a specimen and evaluation thereof were performed similarly to example 1 except for use of the flame retardant (J) instead of the flame retardant (A). Results thereof are shown in Table 1.
In comparative example 1, there was recognized a juicing phenomenon that a flame retardant is oozed out to a surface of a molded product. Furthermore, mold deposits were observed on a surface thereof.

Example 10

Fifteen parts of the flame retardant (E) and 0.5 part of PTFE were added to 100 parts of a modified resin (PPE), the mixture was further mixed in a mixer, fused and kneaded using a 25 mm twin-roll kneader to obtain a flame-retardant resin composition.
The composition was prepared into a test piece of 1/16 inch in thickness by means of injection molding and the test pieces were subjected to evaluation on fire resistance on the basis of the test method of UL-94 and measurement of a thermal deformation temperature in conformity with ASTM D-648. As results of the evaluation and measurement, fire resistance was at the level of V-0 and a thermal deformation temperature was 130°C and neither of juicing and mold deposit phenomena was recognized. The results are shown in Table 1.

Examples 11 and 12

Preparation of specimens and evaluation thereof were performed similarly to Example 10 except for use of the flame retardants (F) and (H) instead of the flame retardant (E). Results thereof are shown in Table 1.
As for Examples 11 and 12 as well, neither of juicing and mold deposit phenomena was recognized in molding.

Comparative Example 2

Preparation of a specimen and evaluation thereof were performed similarly to Example 10 except for use of the flame retardant (J) instead of the flame retardant (E). Results thereof are shown in Table 1.
In Comparative Example 2, there were recognized a juicing phenomenon and a mold deposit phenomenon.

Example 13

Twenty five parts of the flame retardant (E) and 0.5 part of PTFE were added to 100 parts of an ABS resin, the mixture was further mixed in a mixer, fused and kneaded using a 25 mm twin-roll kneader to obtain a flame-retardant resin composition.
The composition was prepared into a test piece of 1/16 inch in thickness by means of injection molding and the test piece was subjected to evaluation on fire resistance on the basis of the test method of UL-94 and measurement of a thermal deformation temperature in conformity with ASTM D-648. As results of the evaluation and measurement, fire resistance was at the level of V-0 and a thermal deformation temperature was 83°C and neither of juicing and mold deposit phenomena was recognized. The results are shown in Table 1.

Examples 14 and 15

Preparation of specimens and evaluation thereof were performed similarly to Example 13 except for use of the flame retardants (F) and (H) instead of the flame retardant (E). Results thereof are shown in Table 1.
As for Examples 14 and 15 as well, neither of juicing and mold deposit phenomena was recognized in molding.

Comparative Example 3

Preparation of a specimen and evaluation thereof were performed similarly to Example 13 except for use of the flame retardant (J) instead of the flame retardant (E). Results thereof are shown in Table 1.
In Comparative Example 3, there were recognized a juicing phenomenon and a mold deposit phenomenon.
In Examples 1 to 15 using flame retardants of the present invention, thermal deformation temperatures were raised and neither of juicing and mold deposit phenomena was recognized in molding as compared with Comparative Examples 1 to 3 each using a phenoxyphosphazene based compound. Molded articles using flame retardants of the present invention are free of vaporization, disappearance or bleeding-out and excellent in fire resistance.

Examples 16 to 18

Cresol novolak epoxy resin, phenol novolak resin, flame retardants (E), (F) or (H), fused silica (inorganic filler), triphenylphosphine (curing catalyst), γ-glycidoxypropyl trimethoxy silane (coupling agent) and other additives such as carnauba wax and carbon black were mixed in proportions (parts by weight) shown in Table 2 and the mixture was further roll kneaded in conditions of a kneading temperature from 80 to 90°C and a time of 10 min to prepare molding materials of Examples 16 to 18.

Table 2

| | | example 16 | example 17 | example 18 | comparative example 4 |
|---|---|---|---|---|---|
| composition | cresol novolak epoxy resin | 100 | 100 | 100 | 100 |
| | phenol novolak resin | 53 | 25 | 38 | 53 |
| | flame retardant (E) | 37 | | | |
| | flame retardant (F) | | 37 | | |
| | flame retardant (H) | | | 37 | |
| | flame retardant (J) | | | | 37 |
| | fused silica | 594 | 594 | 594 | 594 |
| | triphenylphosphine | 1.5 | 1.5 | 1.5 | 1.5 |
| | carnauba wax | 2.0 | 2.0 | 2.0 | 2.0 |
| | carbon black | 1.5 | 1.5 | 1.5 | 1.5 |
| | coupling agent | 3.0 | 3.0 | 3.0 | 3.0 |
| proportions | inorganic filler quantity (wt %) | 75 | 78 | 76 | 75 |
| | flame retardant quantity (wt %) | 4.7 | 4.8 | 4.8 | 4.7 |
| test results | flame retardance UL-94V | V-0 | V-0 | V.0 | V-0 |
| | flame retardance 2 | 0 | 0 | 0 | 30 |
| | hot state hardness | 80 | 81 | 81 | 78 |
| | water absorption (72 hours in %) | 0.03 | 0.04 | 0.05 | 0.26 |
| | adhesion (N/m) | 355 | 360 | 365 | 350 |
| | high temperature storage characteristic (200 hr) | 0/10 | 0/10 | 0/10 | 0/10 |
| | high temperature storage characteristic (400 hr) | 0/10 | 0/10 | 0/10 | 0/10 |
| | high temperature storage characteristic (600 hr) | 0/10 | 0/10 | 0/10 | 0/10 |
| | high temperature storage characteristic (800 hr) | 0/10 | 0/10 | 0/10 | 0/10 |

Comparative Example 4

Preparation of a specimen and evaluation thereof were performed similarly to Example 16 except for use of the flame retardant (J) instead of the flame retardant (E).

Characteristics of molding materials obtained in Examples 16 to 18 and Comparative Example 4 were evaluated according to the following methods.

(1) Flame Retardance

A mold molding a test piece of 1/16 inch in thickness was used, a molding material was molded using a transfer molding machine in conditions of a temperature of 180 ± 3°C, a pressure of 6.9 ± 0.17 MPa and a time of 90 sec and thereafter, as-molded intermediates were cured at 180 ± 5°C for 5 hours to thereafter prepare test pieces. Evaluation was performed according to the UL-94V test method. A total (in sec) of combustion times of 10 test pieces is expressed as flame retardance 2.

(2) Hot State Hardness

A mold molding a disk of 100 mm in diameter and 3 mm in thickness was used, a molding material was molded using a transfer press in conditions of a temperature of 180 ± 3°C, a pressure of 6.9 ± 0.17 MPa and a time of 90 sec and thereafter, an as-molded intermediate immediately after the molding was measured on a hot-state hardness using a Shore hardness tester (D type). A higher value of a hot-state hardness is evaluated better.

(3) Water Absorption

A water absorption was measured in conformity with JIS-K-6911 and a disk of 50 mm in diameter and 3 mm in thickness was prepared and held in an atmosphere in conditions of a temperature of 85°C and a relative humidity of 85% RH to measure a change in weight after a prescribed time elapses.

(4) Adhesion

A molding material was molded on an aluminum foil of 30 μm using a transfer press in conditions of a temperature of 180 ± 3°C, a pressure of 6.9 ± 0.17 MPa and a time of 90 sec and thereafter, measurement was performed on a peel strength of the aluminum foil in a direction of 90 degree.

(5) High temperature storage characteristics

Used were test elements each obtained by forming aluminum wiring in a line/space pattern of 10 μm with a pitch on a silicon substrate of 5 x 9 (mm) in outer size and having an oxide film of 5 μm, each test element was connected by a silver paste to a lead frame made of 42 alloy partially plated with silver, and bonding pads of the element was connected to inner leads with Au wires at 200°C using a thermosonic wire bonder. Thereafter, 16 pin type DIPs (Dual Inline Package) for the elements were formed by means of transfer molding and test ICs thus obtained were stored in a high temperature bath at 200°C to perform a conduction test at prescribed intervals outside the bath and investigate the number of defective ICs. Note that molding of an evaluation IC package was such that a molding material was molded using a transfer press in conditions of a temperature of 180 ± 3°C, a pressure of 6.9 ± 0.17 MPa and a time of 90 sec, followed by curing at 180 ± 5°C for 5 hours. Results obtained are shown in Table 2.

Examples 16 to 18 using flame retardants of the present invention each had a higher hot state hardness, a low water absorption, improved adhesion and improved high temperature storage characteristic as compared with Comparative Example 4 containing phenoxyphosphazene-based compound. Molded articles obtained by molding resin compositions compounded with flame retardants of the present invention were all good in high temperature storage characteristic and also excellent in flame retardance.

A flame-retardant resin composition according to the present invention is excellent in humidity resistance and heat resistance and hard to cause juicing and mold deposits in molding.

A flame retardant according to the present invention can be added appropriately for molding into a flame-retardant molded article, which is especially preferable to be used for electronic parts.

## Claims

**1.** A flame retardant comprising a polymer constituted of at least one type, as a structure unit, of phosphazene compounds, each having per molecule at least one polymerizable functional group selected from among a vinyl group, an allyl group, an acryloyloxy group, a methacryloyloxy group, an acryloyl group, and a methacryloyl group.

**2.** A flame retardant comprising a polymer constituted of at least one type, as a structure unit, of phosphazene compounds, each having per molecule at least one of an acryloyloxy group-substituted phenyl group, an acryloyloxyalkyl group-substituted phenyl group, a methacryloyloxy group-substituted phenyl group and a methacryloyloxyalkyl group-substituted phenyl group, in which the number of repeat units are 3 to 15.

**3.** A flame-retardant resin composition **characterized by** admixing at least one of polymers each comprising, as a structure unit, a phosphazene compound having a polymerizable functional group with a resin.

**4.** The flame-retardant resin composition according to claim 3, wherein said structural unit is derived from at least one of phosphazene compounds each having per molecule at least one of an acryloyloxy group-substituted phenyl group, an acryloyloxyalkyl group-substituted phenyl group, a methacryloyloxy group-substituted phenyl group and a methacryloyloxyalkyl group-substituted phenyl group, in which the number of repeat units are 3 to 10000.

**5.** The flame-retardant resin composition according to claim 4, wherein said structure unit of the polymer admixed with a resin is at least one type selected from cyclic and/or linear phosphazene compounds having a substituted phenyl group, expressed by a general formula (1):

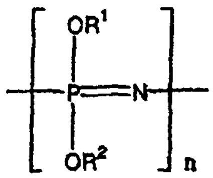

wherein each $R^1$ and $R^2$, being the same or different, is a hydrogen atom, an alkyl group having 1 to 18 carbon atoms, a cycloalkyl group having 5 to 8 carbon atoms, an aryl group having 6 to 14 carbon atoms, a hydroxyaryl group having 6 to 14 carbon atoms, an alkylaryl group having 7 to 18 carbon atoms, an alkenyl group having 2 to 18 carbon atoms, an alkenylaryl group having 8 to 18 carbon atoms, a cyano group, or a group expressed by a general formula (2):

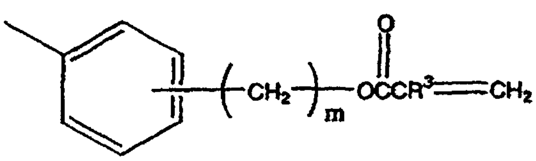

in which $R^3$ is hydrogen atom or a methyl group and m is an integer between 0 to 6, said substituted phenyl group being acryloyloxy group-substituted phenyl group, an acryloyloxyalkyl group-substituted phenyl group, a methacryloyloxy group-substituted phenyl group or a methacryloyloxyalkyl group-substituted phenyl group,
wherein, in the formula (1), at least one of n $R^1$s and n $R^2$s is the substituted phenyl group expressed by the general formula (2),
wherein in the formula (1), n represents an integer between 3 to 10000,
both terminals of the compound being coupled to each other to form a cyclic structure or attach to different terminal groups respectively to form a linear structure, where the terminal group in the linear structure on the phosphorus atom side is a group $-N=P(OR^1)_3$, a group $-N=P(OR^2)_3$, a group $-N=P(=O)OR^1$ or a group $-N=P(=O)OR^2$, and on the nitrogen atom side is a group $-P(OR^1)_4$, a group $-P(OR^2)_4$, a group $-P(=O)(OR^1)_2$ or a group $-P(=O)(OR^2)_2$, in which $R^1$ and $R^2$ are the same as above.

**6.** A flame-retardant resin composition **characterized by** admixing at least one of polymers each comprising, as a structure unit, a phosphazene compound having a polymerizable functional group selected from among a vinyl group, an allyl group, an acryloyloxy group, a methacryloyloxy group, an acryloyl group, and a methacryloyl group with a resin.

**7.** The flame-retardant resin composition according to claim 6, wherein said structure unit is derived from a phosphazene compound having per molecule at least one of a vinyl group-substituted phenyl group, an allyl group-substituted phenyl group, an acryloyloxy group-substituted phenyl group, an acryloyloxyalkyl group-substituted phenyl group, a methacryloyloxy group-substituted phenyl group, a methacryloyloxyalkyl group-substituted phenyl group, an acryloyl group-substituted phenyl group, an acryloylalkyl group-substituted phenyl group, a methacryloyl group-substituted phenyl group and a methacryloylalkyl group-substituted phenyl group.

8. The flame-retardant resin composition according to claim 6 or 7, wherein said structure unit of the polymer admixed with a resin is at least one type selected from cyclic and/or linear phosphazene compounds having a polymerizable functional group, expressed by a general formula (1):

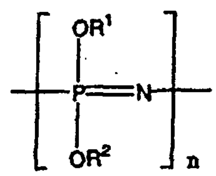

wherein each $R^1$ and $R^2$, being the same or different, is hydrogen atom, an alkyl group having 1 to 18 carbon atoms, a cycloalkyl group having 5 to 8 carbon atoms, an aryl group having 6 to 14 carbon atoms, a hydroxyaryl group having 6 to 14 carbon atoms, alkylaryl group having 7 to 18 carbon atoms, an alkenyl group having 2 to 18 carbon atoms, an alkenylaryl group having 8 to 18 carbon atoms, a cyano group, or a substituted phenyl group having a vinyl group at its terminal, expressed by a general formula (2):

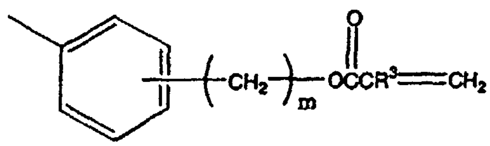

in which $R^3$ is hydrogen atom or a methyl group, and m is an integer between 0 to 6, or a general formula (3):

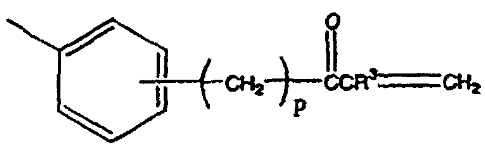

in which $R^3$ is as defined above, and p is an integer between 0 to 6, or a general formula (4):

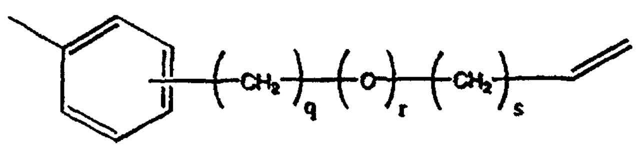

in which q and s are integers between 0 to 6 respectively, r is 0 or 1,
wherein at least one of n $R^1$s and n $R^2$s is the substituted phenyl group expressed by the general formula (2), (3) or (4),
wherein in the formula (1), n represents an integer between 3 to 10000,
both terminals of the compound being coupled to each other to form a cyclic structure or attach to different terminal groups respectively to form a linear structure, where the terminal group in the linear structure on the phosphorus atom side is represented by a group $-N=P(OR^1)_3$, a group $-N=P(OR^2)_3$, a group $-N=P(=O)OR^1$ or a group $-N=P(=O)OR^2$, and on the nitrogen atom side is represented by a group $-P(OR^1)_4$, a group $-P(OR^2)_4$, a group $-P(=O)(OR^1)_2$ or a group $-P(=O)(OR^2)_2$, in which $R^1$ and $R^2$ are the same as above.

9. The flame-retardant resin composition according to any one of claims 6 to 8, wherein said structure unit is derived from at least one of cyclic and/or linear phosphazene compounds, in which the number of repetitive units are 3 to 15.

10. The flame-retardant resin composition according to any one of claims 3 to 9, wherein said structure unit is derived

from at least one of cyclic and/or linear phosphazene compounds, each having per molecule at least one acryloyloxy group-substituted phenyl group, acryloyloxyalkyl group-substituted phenyl group, methacryloyloxy group-substituted phenyl group, and methacryloyloxyalkyl group-substituted phenyl group, in which the number of repeat units is 3 to 15.

**11.** The flame-retardant resin composition according to any one of claims 3 to 10, wherein said polymer contains, as a structure unit, at least one of a thermo-polymerizable or a photo-polymerizable monomer and oligomer.

**12.** The flame-retardant resin composition according to any one of claims 3 to 10, wherein said polymer is a copolymer having a structural unit derived from a compound having a vinyl group.

**13.** A molded article obtained by molding the flame-retardant resin composition according to any one of claims 3 to 12.

**14.** An electronic part obtained by molding the flame-retardant resin composition according to any one of claims 3 to 12.

## INTERNATIONAL SEARCH REPORT

International application No.
PCT/JP01/02153

A. CLASSIFICATION OF SUBJECT MATTER
Int.Cl$^7$ C09K21/14, C08L101/00, 85/02, C08G79/02, 79/04, C08F30/02, 290/06, 290/14, 299/02

According to International Patent Classification (IPC) or to both national classification and IPC

B. FIELDS SEARCHED

Minimum documentation searched (classification system followed by classification symbols)
Int.Cl$^7$ C09K21/14, C08L101/00, 85/02, C08G79/02, 79/04, C08F30/02, 290/06, 290/14, 299/02

Documentation searched other than minimum documentation to the extent that such documents are included in the fields searched

Electronic data base consulted during the international search (name of data base and, where practicable, search terms used)
CA(STN), CAOLD(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| X | JP, 4-134090, A (Nippon Soda Co., Ltd.), 07 May, 1992 (07.05.92), Claims (Family: none) | 1-14 |
| X | JP, 4-13683, A (Maruzen Petrochemical Company, Limited), 17 January, 1992 (17.01.92), Claims (Family: none) | 1,3,6-9,11-14 |
| X | EP, 313863, A1 (HERCULES INCORPORATED), 03 May, 1989 (03.05.89), Claims & US, 4874828, A & JP, 1-158041, A | 1,3,6-9,11-14 |
| X | JP, 5-306342, A (Idemitsu Petrochemical Co., Ltd.), 19 November, 1993 (19.11.93), Claims (Family: none) | 1,3,6-9,11-14 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 May, 2001 (25.05.01) | 19 June, 2001 (19.06.01) |
| Name and mailing address of the ISA/ Japanese Patent Office | Authorized officer |
| Facsimile No. | Telephone No. |

Form PCT/ISA/210 (second sheet) (July 1992)